# EUROPÄISCHE PATENTSCHRIFT

(11) **EP 3 139 108 B1**
(45) Veröffentlichungstag und Bekanntmachung des Hinweises auf die Patenterteilung: **28.03.2018**
(21) Anmeldenummer: 15183855.4
(22) Anmeldetag: 04.09.2015
(51) Int. Cl.: F24H 7/04, F01K 1/00, F22B 1/02, F22B 1/28, F28D 20/00

(54) **SPEICHERVORRICHTUNG UND VERFAHREN ZUM VORÜBERGEHENDEN SPEICHERN VON ELEKTRISCHER ENERGIE IN WÄRMEENERGIE**
STORAGE DEVICE AND METHOD OF TEMPORARILY STORING ELECTRICAL ENERGY INTO HEAT ENERGY
DISPOSITIF DE STOCKAGE ET PROCEDE DE STOCKAGE TEMPORAIRE D'ENERGIE ELECTRIQUE EN ENERGIE THERMIQUE

(43) Veröffentlichungstag der Anmeldung: 08.03.2017
(73) Patentinhaber: Lumenion GmbH, 10829 Berlin (DE)
(72) Erfinder: Zwinkels, Andrew, 10827 Berlin (DE)
(74) Vertreter: Ridderbusch, Oliver

(56) Entgegenhaltungen:
- WO-A1-2006/007733
- WO-A1-2006/072178
- WO-A1-2013/014178
- WO-A1-2013/135718
- GB-A- 501 620

## Beschreibung

Die Erfindung betrifft gemäß Anspruch 1 eine Speichervorrichtung zum vorübergehenden Speichern von elektrischer Energie in Wärmeenergie. Zudem bezieht sich die Erfindung gemäß Anspruch 12 auf ein Verfahren zum vorübergehenden Speichern von elektrischer Energie in Wärmeenergie.

Die Menge an elektrischer Energie, die in ein Stromnetz eingespeist wird, kann zeitlich stark schwanken. Insbesondere die durch Wind- und Sonnenenergie erzeugte elektrische Energiemenge variiert zeitlich stark. Daher kommt es häufig zu einem Überangebot an elektrischer Energie. Um elektrische Energie zu Zeiten eines Überangebots möglichst sinnvoll zu nutzen, werden insbesondere Speichervorrichtungen genutzt, welche elektrische Energie in Wärmeenergie umwandeln und sodann die Wärmeenergie speichern. Im Gegensatz zu elektrischer Energie kann Wärmeenergie in verhältnismäßig großen Mengen bei moderaten Kosten gespeichert werden. Die Wärmeenergie kann schließlich zurück in elektrische Energie gewandelt und wieder dem Stromnetz zugeführt werden.

Nach diesem Prinzip arbeitet eine gattungsgemäße Speichervorrichtung zum vorübergehenden Speichern von elektrischer Energie in Wärmeenergie. Eine solche Speichervorrichtung umfasst:
- elektrische Netzanschlussmittel zum Herstellen einer elektrischen Verbindung mit einem externen Stromnetz,
- eine erste Wärmespeichergruppe, welche mindestens eine erste Wärmespeichereinheit aufweist, umfassend:
   - erste elektrische Heizmittel zum Erzeugen von Wärmeenergie aus elektrischer Energie, wobei die ersten elektrischen Heizmittel mit den elektrischen Netzanschlussmitteln verbunden sind zum Aufnehmen von elektrischer Energie über die elektrischen Netzanschlussmittel;
   - ein erstes Wärmespeichermedium, welches durch die ersten elektrischen Heizmittel zum Speichern von erzeugter Wärmeenergie erhitzbar ist;
   - einen ersten Wärmetauscher zum Übertragen gespeicherter Wärmeenergie vom ersten Wärmespeichermedium auf ein Arbeitsfluid;
- eine Wärmekraftmaschinen-Generatoreinheit zum Umwandeln von Wärmeenergie in elektrische Energie, wobei die Wärmekraftmaschinen-Generatoreinheit mit den elektrischen Netzanschlussmitteln verbunden ist zum Ausgeben von erzeugter elektrischer Energie über die elektrischen Netzanschlussmittel, und
- ein Leitungssystem zum Befördern eines Arbeitsfluids von der ersten Wärmespeichergruppe in Richtung der Wärmekraftmaschinen-Generatoreinheit und insbesondere zurück von der Wärmekraftmaschinen-Generatoreinheit in Richtung der ersten Wärmespeichergruppe;
- eine zweite Wärmespeichergruppe, welche eine zweite Wärmespeichereinheit aufweist, umfassend:
   - zweite elektrische Heizmittel zum Erzeugen von Wärmeenergie aus elektrischer Energie, wobei die zweiten elektrischen Heizmittel mit den elektrischen Netzanschlussmitteln verbunden sind zum Aufnehmen von elektrischer Energie über die elektrischen Netzanschlussmittel;
   - ein zweites Wärmespeichermedium, welches durch die zweiten elektrischen Heizmittel zum Speichern von erzeugter Wärmeenergie erhitzbar ist; und
   - einen zweiten Wärmetauscher zum Übertragen gespeicherter Wärmeenergie vom zweiten Wärmespeichermedium auf ein Arbeitsfluid; und
- wobei das Leitungssystem so gestaltet ist, dass ein Arbeitsfluid von der ersten Wärmespeichergruppe zur zweiten Wärmespeichergruppe und weiter zur Wärmekraftmaschinen-Generatoreinheit leitbar ist.

In entsprechender Weise sind bei einem gattungsgemäßen Verfahren zum vorübergehenden Speichern von elektrischer Energie in Wärmeenergie mittels einer Speichervorrichtung zumindest die folgenden Schritte vorgesehen:
- Aufnehmen von elektrischen Energie aus einem externen Stromnetz über elektrische Netzanschlussmittel der Speichervorrichtung,
- Umwandeln der aufgenommenen elektrischen Energie in Wärmeenergie und Speichern der Wärmeenergie mittels einer ersten Wärmespeichergruppe der Speichervorrichtung, wozu die erste Wärmespeichergruppe eine erste Wärmespeichereinheit aufweist, mit welcher die folgenden Schritte ausgeführt werden:
- Erzeugen von Wärmeenergie aus elektrischer Energie durch erste elektrische Heizmittel, welche mit den elektrischen Netzanschlussmitteln verbunden sind zum Aufnehmen von elektrischer Energie über die elektrischen Netzanschlussmittel;
- Speichern von Wärmeenergie, die von den ersten elektrischen Heizmitteln erzeugt wird, in einem ersten Wärmespeichermedium, welches ein Metall ist;
- Übertragen gespeicherter Wärmeenergie vom ersten Wärmespeichermedium auf ein Arbeitsfluid mittels eines ersten Wärmetauschers;
- Befördern des Arbeitsfluids von der ersten Wärmespeichergruppe in Richtung einer Wärmekraftmaschinen-Generatoreinheit mittels eines Leitungssystems;
- Umwandeln von Wärmeenergie des Arbeitsfluids in elektrische Energie mittels der Wärmekraftmaschinen-Generatoreinheit, und
- Ausgeben von elektrischer Energie, die von der Wärmekraftmaschinen-Generatoreinheit erzeugt wird, über die elektrischen Netzanschlussmittel an das externe Stromnetz,
- Leiten des Arbeitsfluids von der ersten Wärmespeichergruppe über eine zweite Wärmespeichergruppe zur Wärmekraftmaschinen-Generatoreinheit, wobei die zweite Wärmespeichergruppe mindestens eine zweite Wärmespeichereinheit aufweist, mit welcher die folgenden Schritte ausgeführt werden:
   - Erzeugen von Wärmeenergie aus elektrischer Energie durch zweite elektrische Heizmittel der zweiten Wärmespeichereinheit, welche über die elektrischen Netzanschlussmittel elektrische Energie aufnehmen;
   - Speichern von Wärmeenergie, die von den zweiten elektrischen Heizmitteln erzeugt wird, in einem zweiten Wärmespeichermedium der zweiten Wärmespeichereinheit, wobei das zweite Wärmespeichermedium ein Metall ist; und
   - Übertragen gespeicherter Wärmeenergie vom zweiten Wärmespeichermedium auf das Arbeitsfluid mittels eines zweiten Wärmetauschers der zweiten Wärmespeichereinheit.

Eine gattungsgemäße Speichervorrichtung ist von der Anmelderin in der europäischen Patentanmeldung beschrieben, welche am 30. September 2014 angemeldet wurde und das Aktenzeichen 14 187 148.3 trägt.

Ein Energiespeicherkraftwerk ist zudem aus WO 2013/135718 A1 bekannt. Hierbei wird elektrische Energie über Wandler in Wärme umgewandelt. Die Wärme wird in zwei Wärmespeichern gespeichert und kann auf durchströmendes Wasser übertragen werden. Mit Hilfe des Wassers erzeugen eine Turbine und ein Generator elektrische Energie. WO 2006/072178 A1 beschreibt einen Wärmespeicher, welcher elektrische Heizer, ein Wärmespeichermedium und Wärmetauscherrohre aufweist. Das Wärmespeichermedium kann beispielsweise Stahl oder Eisen sein. WO 2013/014178 A1 betrifft eine Vorrichtung zum Speichern von Energie in Wärme, welche sodann wieder in elektrische Energie gewandelt werden kann. WO 2006/007733 A1 beschreibt ein Kraftwerk zum Stromerzeugen, welches auch einen Wärmespeicher aufweist.

In Vorarbeiten, die zur vorliegenden Erfindung geführt haben, hat die Anmelderin einen Phasenübergang des Wärmespeichermediums genutzt, um große Mengen an Energie in Form von latenter Wärme zu speichern. Hierbei wird der Wärmespeicher typischerweise an der Temperatur des Phasenübergangs betrieben. Weil ein Zuführen von Energie in den Wärmespeicher sowie eine Entnahme von Wärmeenergie aus dem Wärmespeicher einen Phasenübergang des Wärmespeichermediums bewirken, bleibt im Betrieb die Temperatur des Wärmespeichermediums im Wesentlichen konstant. Dieses kann beispielsweise Aluminium sein, welches jedoch verhältnismäßig teuer ist. Als Materialien für das Wärmespeichermedium kommen nur solche in Betracht, die eine für die Anwendung geeignete Phasenübergangstemperatur haben.

Die Anmelderin hat erkannt, dass eine solche Einschränkung prinzipiell nicht gegeben ist, wenn an Stelle eines Phasenübergangs eine Temperaturerhöhung des Wärmespeichermediums genutzt wird, das heißt, die spezifische Wärmekapazität des Wärmespeichermediums genutzt wird. In diesem Fall ergibt sich jedoch eine anwendungsabhängige Temperaturuntergrenze für das Wärmespeichermedium. Wird beispielsweise mit dem Arbeitsfluid, das über das Wärmespeichermedium erhitzt wird, eine Turbine angetrieben, so sollte die Temperatur des Arbeitsfluids innerhalb eines verhältnismäßig engen Temperaturintervalls liegen, bei welchem die Turbine mit einem hohen Wirkungsgrad und niedrigem Verschleiß arbeiten kann. Dieses Temperaturintervall ist von der jeweiligen Turbine abhängig. Der Wärmespeicher sollte daher nur soweit entleert, das heißt abgekühlt, werden, dass die Temperatur des erwärmten Arbeitsfluids noch innerhalb dieses Temperaturintervalls liegt. Durch diese Anforderung wird jedoch die nutzbare Kapazität des Wärmespeichers stark eingeschränkt.

Als eine **Aufgabe** der Erfindung kann angesehen werden, ein Verfahren und eine Speichervorrichtung zum vorübergehenden Speichern von elektrischer Energie in Wärmeenergie anzugeben, durch welche in möglichst kosteneffizienter Weise möglichst große Energiemengen speicherbar sind.

Diese Aufgabe wird durch eine Speichervorrichtung gemäß dem Anspruch 1 sowie durch ein Verfahren gemäß dem Anspruch 12 gelöst.

Vorteilhafte Varianten des erfindungsgemäßen Verfahrens und der erfindungsgemäßen Speichervorrichtung sind in den abhängigen Ansprüchen angegeben und werden in der folgenden Beschreibung erläutert.

Bei der oben genannten Speichervorrichtung ist erfindungsgemäß vorgesehen, dass das erste Wärmespeichermedium ein Metall ist und das zweite Wärmespeichermedium ein Metall ist,
dass ein erster Quenchkühler zwischen der ersten Wärmespeichergruppe und der zweiten Wärmespeichergruppe vorhanden und dazu eingerichtet ist, erhitztes Arbeitsfluid, das von der ersten Wärmespeichergruppe kommt, mit nicht-erhitztem Arbeitsfluid zu mischen, welches nicht durch eine der Wärmespeichergruppen erhitzt worden ist,
und/oder
dass ein zweiter Quenchkühler vorhanden ist, welcher zwischen der zweiten Wärmespeichergruppe und der Wärmekraftmaschinen-Generatoreinheit angeordnet und dazu eingerichtet, erhitztes Arbeitsfluid, das von der zweiten Wärmespeichergruppe kommt, mit nicht-erhitztem Arbeitsfluid zu mischen, welches nicht durch die zweite Wärmespeichergruppe erhitzt worden ist.

In entsprechender Weise sind bei dem oben angegeben Verfahren erfindungsgemäß außerdem die folgenden Schritte vorgesehen:
- Abkühlen von erhitztem Arbeitsfluid, das von der ersten Wärmespeichergruppe kommt, bevor es die zweite Wärmespeichergruppe erreicht, mit Hilfe eines ersten Quenchkühlers, welcher eine Kühleinrichtung ist, mit welcher das erhitzte Arbeitsfluid mit nicht erhitztem Arbeitsfluid vermischt wird, wobei das nicht erhitzte Arbeitsfluid nicht durch eine der Wärmespeichergruppen erhitzt worden ist,
   und/oder
- Abkühlen von erhitztem Arbeitsfluid, das von der zweiten Wärmespeichergruppe kommt, bevor es die Wärmekraftmaschinen-Generatoreinheit erreicht, mit Hilfe eines zweiten Quenchkühlers, welcher eine Kühleinrichtung ist, womit das erhitzte Arbeitsfluid mit nicht erhitztem Arbeitsfluid vermischt wird, wobei das nicht erhitzte Arbeitsfluid nicht durch eine der Wärmespeichergruppen erhitzt worden ist.

Als ein grundlegender Gedanke der Erfindung werden mindestens zwei Wärmespeichergruppen verwendet, welche nacheinander von einem Arbeitsfluid durchlaufen werden. Das Arbeitsfluid wird dadurch von beiden Wärmespeichergruppen erhitzt und kann vorteilhafterweise eine genügend hohe Endtemperatur auch dann erreichen, wenn die Temperatur der ersten Wärmespeichergruppe vorrübergehend abgesunken ist. Als ein wesentlicher Vorteil kann dadurch die erste Wärmespeichergruppe über einen verhältnismäßig großen Temperaturbereich betrieben werden. Ohne die zweite Wärmespeichergruppe müsste hingegen die erste Wärmespeichergruppe stets eine verhältnismäßig hohe Minimaltemperatur aufweisen, um das Arbeitsfluid genügend stark erhitzen zu können. Im Ergebnis wird daher durch die zweite Wärmespeichergruppe die nutzbare Kapazität der ersten Wärmespeichergruppe erhöht. Vorteilhafterweise kann dabei die erste Wärmespeichergruppe in prinzipiell bekannter Weise aufgebaut sein, das heißt, es sind hierbei keine zusätzlichen Kosten erforderlich, um im Vergleich zu herkömmlichen Systemen die nutzbare Kapazität zu erhöhen.

Unter dem externen Stromnetz ist ein Stromnetz zu verstehen, welches nicht Teil der Speichervorrichtung ist. Das externe Stromnetz kann insbesondere mit zahlreichen Kraftwerksanlagen verbunden sein, welche jeweils elektrische Energie einspeisen.

Die erfindungsgemäße Speichervorrichtung dient dem vorübergehenden Speichern von elektrischer Energie in Form von Wärmeenergie. Demgemäß wird über elektrische Netzanschlussmittel der Speichervorrichtung sowohl elektrische Energie dem externen Stromnetz entnommen als auch elektrische Energie demselben externen Stromnetz wieder zugeführt. Die Speichervorrichtung kann kontinuierlich arbeiten, wobei Arbeitsfluid durchgängig zwischen den Wärmespeichergruppen und der Wärmekraftmaschinen-Generatoreinheit zirkuliert und somit die Wärmekraftmaschinen-Generatoreinheit durchgängig elektrische Energie erzeugt und an das externe Stromnetz abgibt. Es kann vorgesehen sein, den Durchsatz an Arbeitsfluid zur Wärmekraftmaschinen-Generatoreinheit zeitlich zu variieren, um abhängig von einem Bedarf eine gewünschte Energiemenge zu erzeugen und auszugeben.

In entsprechender Weise erfolgt eine Aufnahme von elektrischer Energie bevorzugt nur dann, wenn ein Überangebot im externen Stromnetz gegeben ist.

Als eine Wärmespeichereinheit wird ein Wärmespeicher bezeichnet, welcher zumindest elektrische Heizmittel, ein Wärmespeichermedium sowie einen Wärmetauscher umfasst. Die Wärmespeichereinheit kann ein isolierendes Gehäuse um die vorgenannten Komponenten herum umfassen, wobei mehrere Wärmespeichereinheiten derselben Wärmespeichergruppe durch ihr jeweiliges isolierendes Gehäuse voneinander getrennt sein können.

Unter elektrischen Heizmitteln können beliebige Einrichtungen aufgefasst werden, welche dazu in der Lage sind, elektrische Energie, bevorzugt möglichst vollständig, in Wärmeenergie umzuwandeln. Die elektrischen Heizmittel können insbesondere resistive Elemente aufweisen, welche aufgrund ihres elektrischen Widerstands eine Wärmeentstehung bewirken.

Das Wärmespeichermedium grenzt an die elektrischen Heizmittel an oder ist über eine thermische Brücke mit diesen verbunden, so dass von den elektrischen Heizmitteln erzeugte Wärmeenergie auf das Wärmespeichermedium übertragen wird. Bei dem Wärmespeichermedium handelt es sich um ein Metall, welches im Betrieb der Speichervorrichtung bevorzugt im festen Aggregatzustand ist und nur soweit erhitzt wird, dass noch kein Phasenübergang zu dem flüssigen Zustand eintritt. Das Metall kann vorzugsweise Stahl sein oder Stahl umfassen.

Als Wärmetauscher wird eine Komponente aufgefasst, welche einen Hohlraum zum Durchleiten eines Arbeitsfluids aufweist und mit dem Wärmespeichermedium thermisch verbunden ist oder dieses direkt kontaktiert, so dass Wärmeenergie auf das Arbeitsfluid im Wärmetauscher übertragen werden kann.

Unter einem Arbeitsfluid wird eine prinzipiell beliebige Flüssigkeit oder ein prinzipiell beliebiges Gas verstanden. Dieses kann insbesondere Wasser sein oder Wasser umfassen. Ein Aggregatzustand des Arbeitsfluids kann sich im Betrieb der Speichervorrichtung zwischen flüssig und gasförmig, insbesondere mehrfach oder wiederholt, ändern.

Unter der Wärmekraftmaschinen-Generatoreinheit wird eine Einrichtung verstanden, welche dazu eingerichtet ist, Wärmeenergie in mechanische Energie umzuwandeln und diese sodann in elektrische Energie umzuwandeln. Wärmekraftmaschinen können insbesondere Dampfmaschinen, Dampfturbinen und/oder Verbrennungsmotoren umfassen.

Durch das Leitungssystem für ein Arbeitsfluid kann insbesondere ein geschlossener Kreislauf bereitgestellt werden. Alternativ kann das Leitungssystem offen gestaltet sein, in welchem Fall das Arbeitsfluid nicht mehrfach die Wärmespeichergruppen und die Wärmekraftmaschinen-Generatoreinheit durchläuft. Die Beschreibung zum Leitungssystem ist dahingehend zu verstehen, dass das Arbeitsfluid zwischen zwei genannten Komponenten auch zu anderen Komponenten geleitet werden kann; die Formulierungen umfassen aber auch den Fall, dass das Arbeitsfluid zwischen zwei genannten Komponenten direkt strömt, ohne weitere Komponenten zu durchlaufen. Beispielsweise ist die Formulierung, wonach ein Arbeitsfluid durch das Leitungssystem von der ersten Wärmespeichergruppe zur zweiten Wärmespeichergruppe leitbar ist, so zu verstehen, dass hierzwischen auch weitere Komponenten vom Arbeitsfluid durchströmt werden können, insbesondere Quenchkühler, welche nachstehend näher beschrieben werden.

Erläuterungen, die sich allgemein auf eine Wärmespeichereinheit beziehen, sind so zu verstehen, dass jede der genannten Wärmespeichereinheiten in dieser Weise gebildet sein kann. Gleiches gilt für die Beschreibungen von elektrischen Heizmitteln, Wärmespeichermedien und Wärmetauschern. Zudem können verschiedene Wärmespeichereinheiten derselben Wärmespeichergruppe oder auch verschiedener Wärmespeichergruppen gleich gebildet sein. Daher sollen Beschreibungen zu einer bestimmten Wärmespeichereinheit so aufgefasst werden, dass auch andere Wärmespeichereinheiten diese Eigenschaften aufweisen können.

Unter einer Wärmespeichergruppe wird eine Anordnung aus einer oder mehrerer Wärmespeichereinheiten verstanden. Dabei kann das Arbeitsfluid entweder der Reihe nach alle Wärmespeichereinheiten dieser Wärmespeichergruppe durchlaufen, oder aber auch auf die verschiedenen Wärmespeichereinheiten dieser Wärmespeichergruppe aufgeteilt werden, so dass die Wärmespeichereinheiten derselben Wärmespeichergruppe nicht oder nicht vollständig nacheinander durchströmt werden.

Im Gegensatz dazu ist die Gestaltung des Leitungssystems so zu verstehen, dass Arbeitsfluid, welches die erste Wärmespeichergruppe durchströmt hat, zwingend, vollständig oder zumindest teilweise, über die zweite Wärmespeichergruppe zur Wärmekraftmaschinen-Generatoreinheit geleitet wird.

Die Temperatur des Arbeitsfluids soll bei Erreichen der Wärmekraftmaschinen-Generatoreinheit innerhalb eines vorgegebenen Temperaturintervalls liegen, welches verhältnismäßig eng sein kann. Um dies auch bei stark variierenden Temperaturen der ersten Wärmespeichergruppe und/oder der zweiten Wärmespeichergruppe zu erreichen, werden ein oder mehrere Quenchkühler eingesetzt.

Insbesondere kann das Leitungssystem so gestaltet sein, dass von der Wärmekraftmaschinen-Generatoreinheit ein Teil des Arbeitsfluids zur ersten Wärmespeichergruppe und ein anderer Teil zum ersten Quenchkühler leitbar ist. Als nicht erhitztes Arbeitsfluid ist insbesondere ein Arbeitsfluid anzusehen, welches die Wärmekraftmaschinen-Generatoreinheit durchlaufen hat und anschließend (noch) keine der Wärmespeichergruppen durchlaufen hat. Allgemein kann als nicht erhitztes Arbeitsfluid jedes Arbeitsfluid angesehen werden, dessen Temperatur niedriger ist als die des erhitzten Arbeitsfluids.

Als ein Quenchkühler soll jede Einrichtung verstanden werden, in welcher Fluide, die aus zwei verschiedenen Leitungen kommen, miteinander vermischt werden können. Das Fluid mit der höheren Temperatur wird dadurch rasch abgekühlt, was auch als Quenchen bezeichnet wird.

Vorzugsweise weist der erste Quenchkühler Kühlungssteuerungsmittel auf, welche eingerichtet sind zum Einstellen einer Menge an nicht-erhitztem Arbeitsfluid, welches dem ersten Quenchkühler zugeführt wird, in Abhängigkeit von einer Temperatur des erhitzten Arbeitsfluids, welches dem ersten Quenchkühler zugeführt wird. Alternativ oder ergänzend kann auch der zweite Quenchkühler Kühlungssteuerungsmittel aufweisen, welche eingerichtet sind zum Einstellen einer Menge an nicht-erhitztem Arbeitsfluid, welches dem zweiten Quenchkühler zugeführt wird, in Abhängigkeit von einer Temperatur des erhitzten Arbeitsfluids, welches dem zweiten Quenchkühler zugeführt wird. Die Temperatur des erhitzten Arbeitsfluids, das die erste Wärmespeichergruppe durchlaufen hat, kann durch einen Temperatursensor zwischen der ersten Wärmespeichergruppe und dem ersten Quenchkühler erfasst werden. Alternativ kann als Maß für die Temperatur des Arbeitsfluids, das die erste Wärmespeichergruppe durchlaufen hat, auch die Temperatur des Arbeitsfluids nach Austritt aus dem ersten Quenchkühler erfasst werden. Entsprechendes gilt bezüglich des zweiten Quenchkühlers: So kann auch hier die Temperatur des Arbeitsfluids, das die zweite Wärmespeichergruppe durchlaufen hat, durch einen Temperatursensor zwischen der zweiten Wärmespeichergruppe und der Wärmekraftmaschinen-Generatoreinheit erfasst werden. Alternativ kann wiederum als Maß für die Temperatur des Arbeitsfluids, das die zweite Wärmespeichergruppe durchlaufen hat, die Temperatur des Arbeitsfluids nach Austritt aus dem zweiten Quenchkühler erfasst werden.

Indem die Menge an zugeführtem nicht-erhitztem Arbeitsfluid variabel einstellbar ist, kann die Temperatur des Arbeitsfluids hinter dem jeweiligen Quenchkühler eingestellt werden.

Der zweite Quenchkühler kann insbesondere so betrieben werden, dass das Arbeitsfluid hinter dem zweiten Quenchkühler stets eine konstante Temperatur hat. Unter einer konstanten Temperatur kann auch ein Temperaturintervall von 2°C, 5°C oder 10°C angesehen werden. Die konstante Temperatur kann insbesondere unabhängig von einer Temperatur der ersten Wärmespeichergruppe und einer Temperatur der zweiten Wärmespeichergruppe eingestellt werden. Vorteilhafterweise hat dadurch das Arbeitsfluid bei Erreichen der Wärmekraftmaschinen-Generatoreinheit stets eine konstante Temperatur.

Der erste Quenchkühler wird bei einer Ausführungsvariante ebenfalls so betrieben, dass austretendes Arbeitsfluid stets eine konstante Temperatur hat, unabhängig von einer Temperatur der ersten Wärmespeichergruppe. Alternativ können die Kühlungssteuerungsmittel des ersten Quenchkühlers aber auch abhängig von einer Temperatur der ersten Wärmespeichergruppe und/oder einer Temperatur der zweiten Wärmespeichergruppe betrieben werden. Dadurch kann das Verhältnis der entnommenen Wärmemenge aus der ersten Wärmespeichergruppe und der entnommenen Wärmeenergie aus der zweiten Wärmespeichergruppe verändert werden. Dadurch kann vorteilhafterweise vermieden werden, dass eine Wärmespeichergruppe vollständig geladen ist (das heißt, eine vorgegebene Maximaltemperatur erreicht hat), während die andere Wärmespeichergruppe nur zu einem geringen Grad geladen ist (beispielsweise nur zu 30% oder 50% bezüglich eines möglichen Temperaturintervalls zwischen Umgebungstemperatur und einer vorgegebenen Maximaltemperatur).

Der oder die Quenchkühler können als Kühlungssteuerungsmittel jeweils eine steuerbare Pumpe und/oder eine steuerbare Drossel aufweisen. Steuerbare Drosseln können einen Druckabfall des Arbeitsfluids zum jeweiligen Quenchkühler hin variabel einstellen und können somit die Menge an Arbeitsfluid, das die Drossel durchläuft, festlegen. Eine Pumpe kann durch eine variable Pumpleistung die durchströmende Menge an Arbeitsfluid festlegen.

Das Leitungssystem umfasst zweckmäßigerweise eine Arbeitspumpe, welche zwischen der Wärmekraftmaschinen-Generatoreinheit und der ersten Wärmespeichergruppe angeordnet ist und somit Arbeitsfluid zur ersten Wärmespeichergruppe befördert. Eine Abzweigung des Leitungssystems zum ersten Quenchkühler und/oder eine Abzweigung zum zweiten Quenchkühler können vorzugsweise zwischen der Arbeitspumpe und der ersten Wärmespeichergruppe angeordnet sein. Dadurch befördert die Arbeitspumpe das Arbeitsfluid auch in Richtung des oder der Quenchkühler, so dass deren Kühlungssteuerungsmittel über kostengünstige steuerbare Drosseln verfügen können und nicht etwa teurere steuerbare Pumpen umfassen müssen.

Die Kühlungssteuerungsmittel des ersten Quenchkühlers und/oder die Kühlungssteuerungsmittel des zweiten Quenchkühlers können dazu eingerichtet sein, die Menge an zugeführtem nicht-erhitztem Arbeitsfluid umso größer zu wählen, je größer eine Temperatur des zugeführten erhitzten Arbeitsfluids ist. Das Arbeitsfluid wird durch den oder die Quenchkühler umso stärker abgekühlt, je wärmer es ist. Dadurch kann eine weitgehend konstante Temperatur des Arbeitsfluids hinter dem Quenchkühler oder hinter den Quenchkühlern erreicht werden.

Vorzugsweise umfasst die erste Wärmespeichergruppe außer der ersten Wärmespeichereinheit mindestens eine weitere Wärmespeichereinheit, wobei jede Wärmespeichereinheit über jeweils eigene elektrische Heizmittel, ein eigenes Wärmespeichermedium und einen eigenen Wärmetauscher verfügt. Die zweite Wärmespeichergruppe kann ebenfalls oder auch alternativ außer der zweiten Wärmespeichereinheit mindestens eine weitere Wärmespeichereinheit aufweisen, wobei jede Wärmespeichereinheit über eigene elektrische Heizmittel, ein eigenes Wärmespeichermedium und einen eigenen Wärmetauscher verfügt.

Jede der genannten Wärmespeichereinheiten kann über mehrere einander abwechselnd angeordnete elektrische Heizmittel, Wärmespeichermedien und Wärmetauscher verfügen.

Eine Wärmespeicherkapazität der ersten Wärmespeichergruppe ist vorzugsweise größer gewählt als eine Wärmespeicherkapazität der zweiten Wärmespeichergruppe. Dies ist vorteilhaft, da die erste Wärmespeichergruppe über einen größeren Temperaturbereich betrieben werden kann als die zweite Wärmespeichergruppe, welche stets eine verhältnismäßig hohe Temperatur haben muss, um das Arbeitsfluid auf die gewünschte Endtemperatur zu erhitzen. Um eine größere Wärmespeicherkapazität bereitzustellen, kann die Masse an Wärmespeichermedium der ersten Wärmespeichergruppe größer sein als die Masse des Wärmespeichermediums der zweiten Wärmespeichergruppe. Auch kann vorgesehen sein, dass die Anzahl an Wärmespeichereinheiten der ersten Wärmespeichergruppe größer ist als die Anzahl an Wärmespeichereinheiten der zweiten Wärmespeichergruppe.

Dass die erste Wärmespeichergruppe über einen größeren Temperaturbereich betrieben werden kann als die zweite Wärmespeichergruppe, kann auch wie folgt dargestellt werden: Eine Aufnahme elektrischer Energie, die durch die erste Wärmespeichergruppe in Wärmeenergie umgewandelt wird, kann so gewählt sein, dass im Betrieb der Speichervorrichtung eine Temperatur des Wärmespeichermediums der ersten Wärmspeichergruppe stets oberhalb einer ersten Temperaturuntergrenze liegt. Eine Aufnahme elektrischer Energie, die durch die zweite Wärmespeichergruppe in Wärmeenergie umgewandelt wird, kann so gewählt sein, dass im Betrieb der Speichervorrichtung eine Temperatur des Wärmespeichermediums der zweiten Wärmespeichergruppe stets oberhalb einer zweiten Temperaturuntergrenze liegt. Vorzugsweise ist nun die zweite Temperaturuntergrenze größer als die erste Temperaturuntergrenze. Somit stellt die zweite Wärmespeichergruppe sicher, dass das Arbeitsfluid auf eine gewünschte Temperatur erhitzt wird, welche höher sein kann als eine Temperatur, welche das Arbeitsfluid nach Durchlaufen der ersten Wärmespeichergruppe maximal erreichen kann. Dies kann insbesondere unabhängig von einer momentanen Temperatur der ersten Wärmespeichergruppe erreicht werden.

Die Wärmekraftmaschinen-Generatoreinheit kann eine einzige Turbine umfassen oder auch eine mehrstufige Dampfturbine mit mindestens einer ersten Turbinenstufe und einer zweiten Turbinenstufe umfassen. In einem solchen Fall kann vor jeder Turbinenstufe eine Wärmespeichergruppe vorgesehen sein. So kann eine dritte Wärmespeichergruppe vorhanden sein, welche eine dritte Wärmespeichereinheit aufweist. Diese Wärmespeichereinheit umfasst: dritte elektrische Heizmittel zum Erzeugen von Wärmeenergie aus elektrischer Energie, wobei die dritten elektrischen Heizmittel mit den elektrischen Netzanschlussmitteln verbunden sind zum Aufnehmen von elektrischer Energie über die elektrischen Netzanschlussmittel; ein drittes Wärmespeichermedium, welches ein Metall ist und durch die dritten elektrischen Heizmittel zum Speichern von erzeugter Wärmeenergie erhitzbar ist; einen dritten Wärmetauscher zum Übertragen gespeicherter Wärmeenergie vom dritten Wärmespeichermedium auf ein Arbeitsfluid. Ist eine dritte Turbinenstufe vorhanden, wird folglich auch eine weitere (das heißt vierte) Wärmespeichergruppe vorgesehen, welche zwischen der zweiten und dritten Turbinenstufe angeordnet wird.

Bei zwei oder mehr Turbinenstufen kann das Leitungssystem so gestaltet sein, dass ein Arbeitsfluid von der zweiten Wärmespeichergruppe zu der ersten Turbinenstufe, von der ersten Turbinenstufe zur dritten Wärmespeichergruppe und von der dritten Wärmespeichergruppe zur zweiten Turbinenstufe leitbar ist. Unter einer Turbinenstufe kann eine Turbine verstanden werden, welche Bewegungsenergie bereitstellt, die sodann von einem Generator in elektrische Energie gewandelt werden kann. Zwischen zwei Turbinenstufen einer mehrstufigen Dampfturbine ist vorzugsweise jeweils eine Wärmespeichergruppe vorhanden. Dadurch kann das Arbeitsfluid stets auf eine ausreichend hohe Temperatur für die folgende Turbinenstufe erhitzt werden. Damit die Temperatur des Arbeitsfluids nicht zu hoch für die folgende Turbinenstufe ist, kann jeder der Wärmespeichergruppen ein oder mehrere Quenchkühler zugeordnet sein.

Der Ausdruck "Turbinenstufen" kann allgemein so verstanden werden, dass mehrere Wärmekraftmaschinen oder Wärmekraftmaschinen-Generatoreinheiten hintereinander angeordnet sind, welche nacheinander vom Arbeitsfluid durchströmt werden. Jede Turbinenstufe kann somit beispielsweise eine Turbine oder einen Motor umfassen.

Prinzipiell ist es möglich, dass die Wärmespeichereinheiten von einer Wärmespeichergruppe bezüglich einer Leitung des Arbeitsfluids seriell angeordnet sind, das heißt, das Arbeitsfluid durchströmt nacheinander die Wärmespeichereinheiten dieser Wärmespeichergruppe. Hierbei wird das Arbeitsfluid von der ersten Wärmespeichereinheit, die es durchströmt, jedoch mehr Energie aufnehmen als von der letzten Wärmespeichereinheit dieser Wärmespeichergruppe, die es durchströmt, da sich das Arbeitsfluid mit jeder durchströmten Wärmespeichereinheit weiter erhitzt. Dies hat zur Folge, dass die Wärmespeichereinheiten von einer Wärmespeichergruppe unterschiedlich stark durch das Arbeitsfluid abgekühlt werden. Dieser Umstand kann verringert oder ausgeschlossen werden, wenn die Wärmespeichereinheiten von einer der Wärmespeichergruppen bezüglich einer Leitung des Arbeitsfluids parallel zueinander angeordnet sind. Somit wird das Arbeitsfluid auf separate Leitungsabschnitte aufgeteilt, die jeweils zu einem der Wärmetauscher dieser Wärmespeichereinheiten führen. Nach Durchlaufen der Wärmetauscher wird das Arbeitsfluid wieder zusammengeführt. Dadurch kann erreicht werden, dass jeder Wärmespeichereinheit einer Wärmespeichergruppe eine gleich große Wärmeenergiemenge entnommen wird.

Vorzugsweise ist in jedem der separaten Leitungsabschnitte eine Drossel angeordnet zum Erzeugen eines Druckabfalls des Arbeitsfluides. Diese Drosseln können feste Drosseln sein, deren Drosselwirkung nicht verstellbar ist oder zumindest im Betrieb der Speichervorrichtung nicht verstellt wird. Die Aufteilung des Arbeitsfluids zu den verschiedenen Wärmespeichereinheiten der ersten Wärmespeichergruppe hängt ab vom Druckabfall über die separaten Leitungsabschnitte und die jeweiligen Wärmespeichereinheiten. Ohne Drosseln würden geringe Unterschiede zwischen den separaten Leitungsabschnitten bereits dazu führen, dass das Arbeitsfluid ungleichmäßig auf die Wärmespeichereinheiten verteilt würde. Auch können die Wärmespeichereinheiten der ersten Wärmespeichergruppe übereinander angeordnet sein, wodurch der Höhenschied zwischen Ihnen einen Druckabfall und somit eine ungleichmäßige Aufteilung des Arbeitsfluids bewirkt. Diese Nachteile können durch feste Drosseln vermieden werden. Die Drosseln in den separaten Leitungsabschnitten können jeweils gleich gebildet sein, also einen gleich hohen Druckabfall bewirken. Alternativ können die Drosseln auch unterschiedliche Druckabfälle bewirken, um einen Höhenunterschied zwischen den Wärmespeichereinheiten zu kompensieren. In diesem Fall bewirkt eine Drossel einen umso größeren Druckabfall, je höher ihre zugehörige Wärmespeichereinheit angeordnet ist. Die Drosseln bewirken vorzugsweise einen Druckabfall von mindestens 3 bar, bevorzugt mindestens 5 bar, um eine gleichmäßige Aufteilung des Arbeitsfluids zu gewährleisten.

Die zweiten und gegebenenfalls weiteren vorhandene Wärmespeichergruppen können ebenfalls über separate Leitungsabschnitte und insbesondere Drosseln, wie oben beschrieben, verfügen.

Alternativ kann es aber auch vorteilhaft sein, wenn nur die Wärmespeichereinheiten der ersten Wärmespeichergruppe jeweils eine Drossel in dem zugehörigen separaten Leitungsabschnitt aufweisen, nicht aber die Wärmespeichereinheiten der zweiten Wärmespeichergruppe und die Wärmespeichereinheiten einer gegebenenfalls vorhandenen dritten Wärmespeichergruppe. An der ersten Wärmespeichergruppe sind Drosseln besonders wichtig, da hier das Arbeitsfluid typischerweise als Flüssigkeit hingeleitet wird und die Aufteilung einer Flüssigkeit stark durch Druckabfälle beeinflusst wird. Hingegen liegt das Arbeitsfluid nach Durchströmen der ersten Wärmespeichergruppe in der Regel als Gas vor. Dieses verteilt sich verhältnismäßig gleichmäßig auf die Wärmespeichereinheiten der zweiten Wärmespeichergruppe, auch wenn unterschiedliche Druckabfälle über die parallel zueinander angeordneten Wärmespeichereinheiten dieser Wärmespeichergruppe bestehen. Bei einer weiteren Ausführungsform ist vor den Wärmespeichereinheiten der zweiten und möglicherweise weiterer vorhandener Wärmespeichergruppen jeweils eine Drossel vorhanden, welche einen geringeren Druckabfall bewirkt als die Drosseln an der ersten Wärmespeichergruppe. Damit wird dem Umstand Rechnung getragen, dass das Arbeitsfluid an der zweiten und möglicherweise weiterer vorhandener Wärmespeichergruppen als Gas vorliegt.

Vorzugsweise sind einige oder sämtliche der beschriebenen Drosseln als Federdrosseln ausgeführt. Diese erzeugen einen variablen Druckabfall abhängig von der Durchflussmenge. Die Durchflussmenge kann abhängig von der Leistung einer Turbine der Wärmekraftmaschinen-Generatoreinheit variieren. Bei geringer Turbinenleistung ist die Durchflussmenge reduziert. In diesem Fall erzeugen die Federdrosseln einen geringeren Druckabfall.

Zwischen der ersten Wärmespeichergruppe und der zweiten Wärmespeichergruppe kann außer dem ersten Quenchkühler auch mindestens weiterer Quenchkühler vorhanden sein. Im diesem Fall sind eine oder mehrere Wärmespeichereinheiten der ersten Wärmespeichergruppe mit dem ersten Quenchkühler verbunden, während eine oder mehrere andere der Wärmespeichereinheiten dieser Wärmespeichergruppe mit dem mindestens einen weiteren Quenchkühler verbunden sind. Der erste Quenchkühler ist nun mit mindestens einer der Wärmespeichereinheiten der zweiten Wärmespeichergruppe verbunden. Hingegen ist der mindestens eine weitere Quenchkühler mit einer oder mehreren anderen Wärmespeichereinheiten der zweiten Wärmespeichergruppe verbunden. Bei dieser Ausführung wird demnach Arbeitsfluid, welches auf mehrere parallel zueinander angeordnete Wärmespeichereinheiten der ersten Wärmespeichergruppe aufgeteilt wurde, nach Durchlaufen der ersten Wärmespeichergruppe nicht wieder zusammengeführt. Hingegen erfolgt eine Zusammenführung erst nach Durchlaufen des ersten und mindestens einen weiteren Quenchkühlers sowie der zweiten Wärmespeichergruppe. In anderen Worten sind Wärmespeichereinheiten der ersten Wärmespeichergruppe, der erste Quenchkühler und mindestens eine Wärmespeichereinheit der zweiten Wärmespeichergruppe parallel angeordnet zu anderen Wärmespeichereinheiten der ersten Wärmespeichergruppe, dem mindestens einen weiteren Quenchkühler und mindestens einer anderen Wärmespeichereinheit der zweiten Wärmespeichergruppe. Die erste Wärmespeichergruppe kann mehr Wärmespeichereinheiten umfassen als die zweite Wärmespeichergruppe, womit eine trichterartige Anordnung möglich wird. Hierbei ist jede der Wärmespeichereinheiten der zweiten Wärmespeichergruppe mit jeweils einem Quenchkühler verbunden, welcher sich in Strömungsrichtung des Arbeitsfluids vor der zweiten Wärmespeichergruppe befindet. Jeder dieser Quenchkühler, welche zwischen der ersten und zweiten Wärmespeichergruppe angeordnet sind, ist mit jeweils mindestens zwei Wärmespeichereinheiten der ersten Wärmespeichergruppe verbunden.

Bei einer bevorzugten Verfahrensvariante wird ein Anteil des Arbeitsfluids durch die erste Wärmespeichergruppe geleitet und dort erhitzt, während ein anderer Anteil des Arbeitsfluids nicht durch die erste Wärmespeichergruppe geleitet und somit nicht dort erhitzt wird. Die beiden Anteile des Arbeitsfluids werden nun in einem Quenchkühler zwischen der ersten Wärmespeichergruppe und der zweiten Wärmespeichergruppe zusammengeführt. Dabei wird der Anteil des Arbeitsfluids, der nicht durch die erste Wärmespeichergruppe geleitet wird, so geregelt, dass eine Temperatur des Arbeitsfluids hinter dem ersten Quenchkühler und vor der zweiten Wärmespeichergruppe möglichst konstant ist.

In gleicher Weise kann das Arbeitsfluid hinsichtlich der zweiten Wärmespeichergruppe aufgeteilt und in einem Quenchkühler, der sich zwischen der zweiten Wärmespeichergruppe und der Wärmekraftmaschinen-Generatoreinheit befindet, zusammengeführt werden, um eine Temperatur des Arbeitsfluids unmittelbar vor der Wärmekraftmaschinen-Generatoreinheit möglichst konstant zu halten.

Verfahrensvarianten ergeben sich insbesondere durch den bestimmungsgemäßen Gebrauch der beschriebenen Speichervorrichtungen der Erfindung. Ebenso ergeben sich Ausführungsformen der erfindungsgemäßen Speichervorrichtung durch eine Gestaltung zum Ausführen der beschriebenen Verfahrensvarianten.

Weitere Eigenschaften und Vorteile der Erfindung werden mit Bezug auf die beigefügten schematischen Zeichnungen beschrieben.
- Fig. 1: zeigt ein Ausführungsbeispiel einer Speichervorrichtung;
- Fig. 2: zeigt ein weiteres Ausführungsbeispiel einer Speichervorrichtung;
- Fig. 3: zeigt ein Ausführungsbeispiel einer erfindungsgemäßen Speichervorrichtung;
- Fig. 4: zeigt ein wiederum weiteres Ausführungsbeispiel einer erfindungsgemäßen Speichervorrichtung;
- Fig. 5: zeigt ein wiederum weiteres Ausführungsbeispiel einer erfindungsgemäßen Speichervorrichtung;
- Fig. 6: zeigt ein wiederum weiteres Ausführungsbeispiel einer erfindungsgemäßen Speichervorrichtung.

Gleiche oder gleichwirkende Komponenten sind in den Figuren in der Regel mit demselben Bezugszeichen gekennzeichnet.

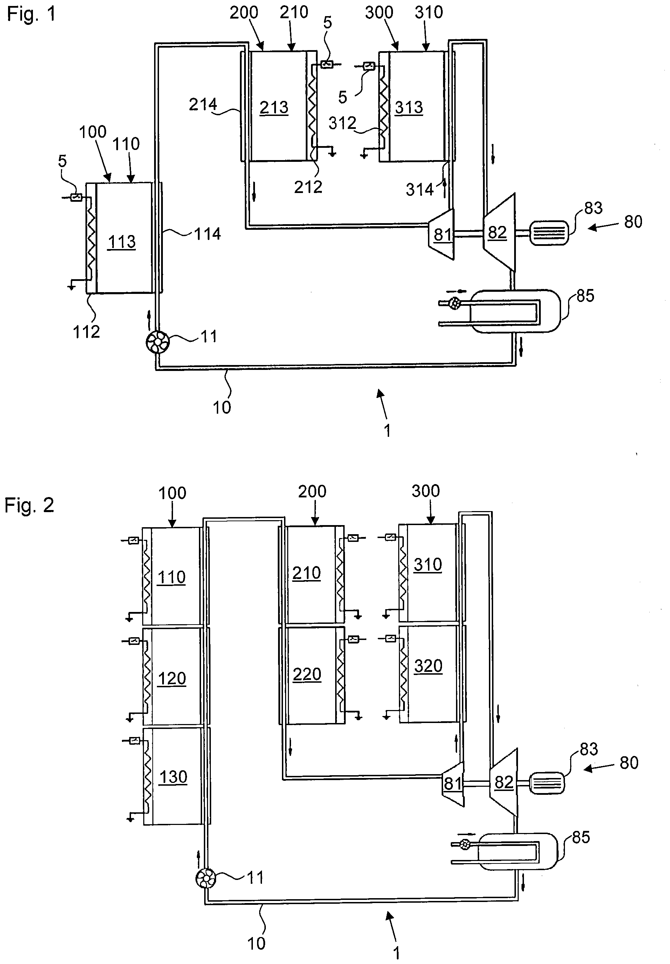

Eine Speichervorrichtung 1, welche wesentliche Bestandteile einer erfindungsgemäßen Speichervorrichtung umfasst, ist schematisch in Figur 1 dargestellt. Die Speichervorrichtung 1 umfasst als wesentliche Komponenten eine erste Wärmespeichergruppe 100, eine zweite Wärmespeichergruppe 200 und eine Wärmekraftmaschinen-Generatoreinheit 80.

Die Wärmekraftmaschinen-Generatoreinheit 80 kann fakultativ mit einer mehrstufigen Turbine ausgeführt sein. Im dargestellten Fall umfasst sie eine zweistufige Turbine mit einer ersten Turbinenstufe 81 und einer zweiten Turbinenstufe 82. Von diesen erzeugte Bewegungsenergie wird jeweils über einen Generator 83 in elektrische Energie umgewandelt. Im Falle einer mehrstufigen Turbine können weitere Wärmespeichergruppen vorhanden sein, wie die dritte Wärmespeichergruppe 300 in Figur 1.

Die Speichervorrichtung 1 kann elektrische Energie aufnehmen und diese in Form von Wärmeenergie speichern. Die Wärmeenergie kann sodann zurück in elektrische Energie umgewandelt und ausgegeben werden. Selbstverständlich sind alle Umwandlungsprozesse verlustbehaftet, sodass beispielsweise die Umwandlung von Wärmeenergie in elektrische Energie so zu verstehen ist, dass jedenfalls ein Teil der Wärmeenergie in elektrische Energie umgewandelt wird.

Die erste Wärmespeichergruppe 100 umfasst bei Figur 1 eine Wärmespeichereinheit 110. Diese verfügt über elektrische Heizmittel 112, welche mittels elektrischen Netzanschlussmitteln 5 mit einem externen Stromnetz verbunden sind. Somit können die elektrischen Heizmittel 112 elektrische Energie dem externen Stromnetz entnehmen und in Wärmeenergie umwandeln. Die Wärmeenergie wird sodann zumindest teilweise an ein Wärmespeichermedium der Wärmespeichereinheit 110 übertragen. Dieses Wärmespeichermedium 113 ist ein Metall und umfasst vorzugsweise Eisen oder Stahl. Eisen oder Stahl sind verhältnismäßig kostengünstig und bieten eine verhältnismäßig hohe spezifische Wärmekapazität. Das Metall 113 wird im Betrieb soweit erhitzt, dass es weiterhin in festem Aggregatszustand vorliegt. Mit dem Metall 113 verbunden ist ein Wärmetauscher 114 der Wärmespeichereinheit 110. Durch den Wärmetauscher 114 kann ein Arbeitsfluid strömen, welches Wärmeenergie vom Metall 113 aufnimmt.

Ein Leitungssystem 10 führt das Arbeitsfluid zu dem Wärmetauscher 114 und von diesem weiter zu der zweiten Wärmespeichergruppe 200. Diese kann gleich gebildet sein wie die erste Wärmespeichergruppe. Sie kann insbesondere über eine zweite Wärmespeichereinheit 210 verfügen, welche zweite elektrische Heizmittel 212, ein zweites Wärmespeichermedium 213 und einen zweiten Wärmetauscher 214 umfasst. Das Arbeitsfluid wird im zweiten Wärmetauscher 214 weiter erhitzt und sodann durch das Leitungssystem 10 zur Turbine 81 geleitet.

Als ein zentraler Gedanke der Erfindung durchströmt das Arbeitsfluid nacheinander die beiden Wärmespeichergruppen 100, 200, welche voneinander thermisch isoliert sind, beispielsweise durch separate Gehäuse. Dadurch können die Wärmespeichergruppen 100, 200 voneinander verschiedene Temperaturen aufweisen. Insbesondere hat die zweite Wärmespeichergruppe 200 im Betrieb eine Temperatur, welche oberhalb einer Minimaltemperatur liegt, die genügt, um das Arbeitsfluid auf eine für die Turbine 81 ausreichende Temperatur zu erhitzen. Diese Minimaltemperatur kann beispielsweise bei 510°C liegen, damit das Arbeitsfluid anschließend eine Temperatur von etwa 450°C hat. Im Gegensatz dazu kann die erste Wärmespeichergruppe 100 eine Temperatur haben, welche im Betrieb zwischen Temperaturen oberhalb und unterhalb dieser Temperaturuntergrenze schwanken kann. Beispielsweise kann die Temperatur des Wärmespeichermediums der ersten Wärmespeichergruppe 100 im Betrieb zwischen 400°C und 700°C schwanken. Somit kann die erste Wärmespeichergruppe 100 über einen größeren Temperaturbereich betrieben werden als die zweite Wärmespeichergruppe 200. Vorteilhafterweise ist dadurch eine besonders große nutzbare Kapazität, das heißt ein besonders großer nutzbarer Temperaturbereich, der ersten Wärmespeichergruppe 100 möglich.

Die Gestaltung des ersten Wärmetauschers 114 und eine Strömungsgeschwindigkeit des Arbeitsfluids durch diesen Wärmetauscher 114 bestimmen, welche Temperatur das Arbeitsfluid nach Durchströmen der ersten Wärmespeichergruppe 100 erreicht. Vorzugsweise sind diese Eigenschaften so gewählt, dass die Temperatur des Arbeitsfluids noch unter einer Zieltemperatur des Arbeitsfluids liegt, welche an der Turbine 81 erreicht werden soll. Beispielsweise kann die Temperatur des Arbeitsfluids unmittelbar hinter der ersten Wärmespeichergruppe 330° C betragen. Dadurch wird sichergestellt, dass das Arbeitsfluid nicht nur von der ersten Wärmespeichergruppe 100 Wärmeenergie entnimmt, sondern auch von der zweiten Wärmespeichergruppe 200. Somit wird vermieden, dass die erste Wärmespeichergruppe 100 vollständig abkühlt, während die zweite Wärmespeichergruppe 200 nahe ihrer Maximaltemperatur ist.

Über die erste Turbine 81 wird das Arbeitsfluid entspannt und abgekühlt. Beispielsweise kann es unmittelbar hinter der ersten Turbine eine Temperatur von knapp über 200°C haben. Sodann durchströmt es eine dritte Wärmespeichergruppe 300. Diese kann wie die beiden anderen Wärmespeichergruppen 100 und 200 gestaltet sein. Sie umfasst zumindest eine dritte Wärmespeichereinheit 310 mit elektrischen Heizmitteln 312, einem Wärmespeichermedium 313 und einem Wärmetauscher 314.

Von der dritten Wärmespeichergruppe 300 wird das Arbeitsfluid durch das Leitungssystem 10 bei zum Beispiel 450°C zur zweiten Turbine 82 geführt.

Auf die Wärmekraftmaschinen-Generatoreinheit 80 kann ein Kondenser oder Verflüssiger 85 folgen. In diesem geht das Arbeitsfluid von Gasform in flüssigen Zustand über. Hierbei wird Wärmeenergie auf ein anderes Fluid in einem separaten Kreislauf übertragen, welches zu Heizzwecken eingesetzt werden kann.

Hinter dem Verflüssiger 85 kann das Arbeitsfluid beispielsweise eine Temperatur von 100°C und einen Druck von 1 bar haben. Im Leitungssystem 10 zwischen dem Verflüssiger 85 und der ersten Wärmespeichergruppe 100 kann eine Arbeitspumpe 11 angeordnet sein. Diese kann einen Arbeitsdruck von beispielsweise 130 bar erzeugen, mit dem das Arbeitsfluid zur ersten Wärmespeichergruppe 100 befördert wird.

Eine weitere Speichervorrichtung 1, welche wesentliche Bestandteile einer erfindungsgemäßen Speichervorrichtung 1 umfasst, ist schematisch in Figur 2 dargestellt. Dieses Ausführungsbeispiel unterscheidet sich von dem vorherigen durch die Gestaltung der drei Wärmespeichergruppen 100, 200, 300. In dem Ausführungsbeispiel von Figur 2 umfassen die Wärmespeichergruppen 100, 200, 300 jeweils mehrere Wärmespeichereinheiten. Dabei umfasst die erste Wärmespeichergruppe 100 mehr Wärmespeichereinheiten 110, 120, 130 als die beiden anderen Wärmespeichergruppen 200, 300.

Die Wärmespeichereinheiten derselben Wärmespeichergruppe sind bei diesem Ausführungsbeispiel in Reihe angeordnet. Das heißt, sie werden nacheinander vom Arbeitsfluid durchströmt. Um eine möglichst gleichmäßige Wärmeentnahme aus den verschiedenen Wärmespeichereinheiten derselben Wärmespeichergruppe zu erreichen, kann es aber bevorzugt sein, dass die Wärmespeichereinheiten derselben Wärmespeichergruppe parallel zueinander angeordnet sind.

Im dargestellten Beispiel umfasst die erste Wärmespeichergruppe 100 drei Wärmespeichereinheiten 110, 120 und 130, während die zweite Wärmespeichergruppe 200 zwei Wärmespeichereinheiten 210 und 220 umfasst und die dritte Wärmespeichergruppe 300 zwei Wärmespeichereinheiten 310 und 320 umfasst. Andere Anzahlen an Wärmespeichereinheiten sind möglich. Zudem müssen die Wärmespeichereinheiten derselben Wärmespeichergruppe auch nicht in Reihe nacheinander durchströmt werden.

Die Wirkung der ersten Wärmespeichergruppe 100 auf das Arbeitsfluid kann auch als Aufwärmen und Verdampfen bezeichnet werden, während die zweite Wärmespeichergruppe 200 ein Überhitzen des Arbeitsfluids bewirkt. Durch die dritte Wärmespeichergruppe 300 erfolgt sodann ein Zwischenüberhitzen des Arbeitsfluids.

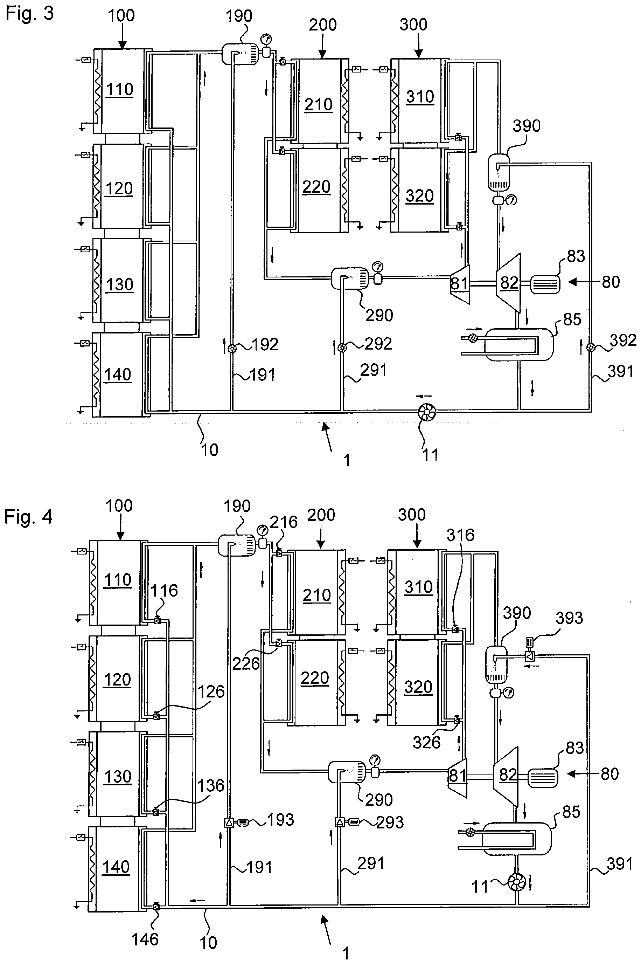

Eine Ausführungsform der erfindungsgemäßen Speichervorrichtung 1 ist schematisch in Figur 3 dargestellt. Dieses unterscheidet sich von der Ausführungsform aus Figur 2 im Wesentlichen durch die parallele Anordnung von Wärmespeichereinheiten derselben Wärmespeichergruppe sowie durch die Verwendung von Quenchkühlern 190, 290 und 390.

Das von der Arbeitspumpe 11 unter Druck gesetzte Arbeitsfluid durchströmt hier nicht nacheinander die Wärmespeichereinheiten 110, 120, 130 und 140 der ersten Wärmespeichergruppe 100. Vielmehr wird das Arbeitsfluid auf separate Leitungsabschnitte aufgeteilt, von denen jede zu genau einer dieser Wärmespeichereinheiten 110, 120, 130, 140 führt. Jeder aufgeteilte Anteil des Arbeitsfluids durchströmt somit genau eine Wärmespeichereinheit 110, 120, 130, 140. Anschließend werden die Anteile des Arbeitsfluids wieder zusammengeführt. Eine solche parallele Anordnung hat gegenüber einer Reihenanordnung den Vorteil, dass jeder Wärmespeichereinheit 110, 120, 130, 140 im Wesentlichen die gleiche Wärmeenergiemenge entnommen wird.

Nach Durchströmen der ersten Wärmespeichergruppe 100 gelangt das Arbeitsfluid über einen ersten Quenchkühler 190 zur zweiten Wärmespeichergruppe 200. In dem ersten Quenchkühler 190 wird das Arbeitsfluid, das von der ersten Wärmespeichergruppe 100 kommt, mit Arbeitsfluid vermischt, welches über eine Nebenleitung 191 in den ersten Quenchkühler 190 gelangt. Die Nebenleitung 191 zweigt Arbeitsfluid zwischen der Arbeitspumpe 11 und der ersten Wärmespeichergruppe 100 in Richtung des ersten Quenchkühlers 190 ab. Zum Befördern des Arbeitsfluids in der Leitung 191 zum ersten Quenchkühler 190 kann eine Pumpe 192 vorgesehen sein. Durch den ersten Quenchkühler 190 wird das erhitzte Arbeitsfluid von der ersten Wärmespeichergruppe 100 mit nicht erhitztem Arbeitsfluid vermischt und somit abgekühlt. Der erste Quenchkühler 190 stellt die Menge an Arbeitsfluid, die über die Leitung 191 zugeführt wird, variabel so ein, dass das Arbeitsfluid hinter dem ersten Quenchkühler 190 eine gewünschte, insbesondere konstante, Temperatur hat. Vorteilhafterweise kann dadurch die erste Wärmespeichergruppe 100 über einen großen Temperaturbereich betrieben werden, ohne dass es zu Schwankungen oder großen Schwankungen der Temperatur des Arbeitsfluids bei Erreichen der zweiten Wärmespeichergruppe 200 kommt.

In entsprechender Weise wird ein zweiter Quenchkühler 290 zwischen der zweiten Wärmespeichergruppe 200 und der Wärmekraftmaschinen-Generatoreinheit 80 verwendet. Dem zweiten Quenchkühler 290 ist wiederum eine Nebenleitung 291 zugeordnet, in welcher sich eine Pumpe 292 befindet und welche mit dem Leitungssystem 10 zwischen der Arbeitspumpe 11 und der ersten Wärmespeichergruppe 100 verbunden ist.

Außerdem ist ein dritter Quenchkühler 390 zwischen der dritten Wärmespeichergruppe 300 und der zweiten Turbine 82 vorhanden. Der dritte Quenchkühler 390 verfügt über eine Nebenleitung 391 mit darin angeordneter Pumpe 392, wobei die Nebenleitung 391 mit dem Leitungssystem 10 zwischen dem Verflüssiger 85 und der ersten Wärmespeichergruppe 100 verbunden ist.

Eine wiederum weitere Ausführungsform der erfindungsgemäßen Speichervorrichtung 1 ist schematisch in Figur 4 gezeigt. Diese entspricht im Wesentlichen der Ausführungsform von Figur 3. Bei Figur 4 erzeugt jedoch die Arbeitspumpe 11 einen Druck, welcher größer ist als ein an der Wärmekraftmaschinen-Generatoreinheit 80 erforderlicher Druck. Daher wird der Einsatz von Drosseln ermöglicht. So können in den separaten Leitungsabschnitten, die zu den Wärmespeichereinheiten 110, 120, 130, 140 der ersten Wärmespeichergruppe 100 führen, jeweils eine Drossel 116, 126, 136, 146 vorgesehen sein. Bei einer parallelen Aufteilung des Arbeitsfluids auf die verschiedenen Wärmespeichereinheiten der ersten Wärmespeichergruppe 100 wird die Aufteilung durch den jeweiligen Druckabfall über die Wärmespeichereinheiten 110, 120, 130 und 140 bestimmt. Indem Drosseln 116, 126, 136, 146 verwendet werden, kann dieser Druckabfall jeweils auf einen gleichen Wert gebracht werden. Damit ist vorteilhafterweise eine gleichmäßige Aufteilung des Arbeitsfluids möglich. Ein Druckabfall durch eine der Drosseln ist zweckmäßigerweise deutlich größer als ein Druckabfall, der durch den zugehörigen, separaten Leitungsabschnitt und den zugehörigen Wärmetauscher dieser Wärmespeichereinheit bewirkt wird, beispielsweise mindestens fünfmal oder mindestens zehnmal so groß. Dadurch wird vermieden, dass unbeabsichtigte Variationen an den separaten Leitungsabschnitten oder den Wärmetauschern zu einer nennenswerten Beeinflussung der Aufteilung des Arbeitsfluids auf die verschiedenen Wärmespeichereinheiten 110, 120, 130, 140 führen.

Bei dem Ausführungsbeispiel von Figur 4 ist in den Nebenleitungen 191, 291, 391 zu den Quenchkühlern 190, 290, 390 zudem jeweils eine einstellbare Drossel 193, 293, 393 angeordnet. Diese Drosseln 193, 293, 393 können die Pumpen aus Figur 3 ersetzen. Die Drosseln 193, 293, 393 werden im Betrieb der Speichervorrichtung 1 variabel in Abhängigkeit der Temperatur des erhitzten Arbeitsfluids am jeweils zugehörigen Quenchkühler 190, 290, 390 eingestellt.

Bei dem Ausführungsbeispiel von Figur 4 sind auch die beiden Wärmespeichereinheiten 210, 220 der zweiten Wärmespeichergruppe 200 zueinander parallel angeordnet. Für eine gleichmäßige Aufteilung des Arbeitsfluids auf diese ist jeder der Wärmespeichereinheiten 210, 220 eine feste Drossel 216, 226 vorgeordnet. Ebenso sind die Wärmespeichereinheiten 310, 320 der dritten Wärmespeichergruppe 300 parallel zueinander angeordnet und verfügen jeweils über eine Drossel 316, 326.

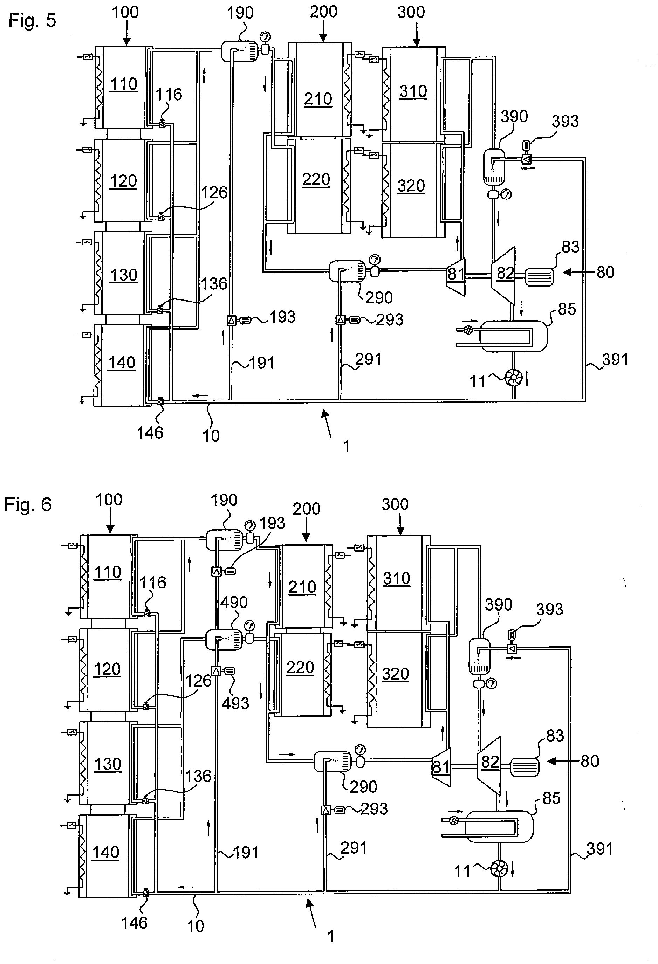

Das Arbeitsfluid liegt bei den Drosseln 116, 126, 136, 146 der ersten Wärmespeichergruppe 100 in flüssiger Form vor, weshalb diese Drosseln für eine gleichmäßige Aufteilung des Arbeitsfluids besonders wichtig sind. Hingegen liegt das Arbeitsfluid an den Drosseln 216, 226, 316, 326 in Gasform vor, weshalb hier Drosseln für eine gleichmäßige Aufteilung des Arbeitsfluid weniger wichtig sind. Daher können die Drosseln 216, 226, 316, 326 an der zweiten und dritten Wärmespeichergruppe 200, 300 auch entfallen. Eine solche Ausführungsform ist schematisch in Figur 5 gezeigt. Im Übrigen gleicht die Ausführungsform von Figur 5 der aus Figur 4.

Eine weitere Ausführung ist wiederum schematisch in Figur 6 gezeigt. Diese unterscheidet sich von der Ausführungsform von Figur 5 in der Gestaltung des Leitungssystems 10 zwischen der ersten und zweiten Wärmespeichergruppe 100, 200. Bei Figur 6 wird das Arbeitsfluid von zwei Wärmespeichereinheiten 110, 120, beziehungsweise 130, 140 zusammengeführt und jeweils zu einem Quenchkühler 190 beziehungsweise 490 geführt. Jeder dieser Quenchkühler 190, 490 ist sodann mit genau einer der Wärmespeichereinheiten 210, 220 der zweiten Wärmespeichergruppe 200 verbunden. Vorteilhafterweise werden durch diese Anordnung die Strömungsunterschiede des Arbeitsfluids zwischen verschiedenen Wärmespeichereinheiten minimiert. Dem weiteren Quenchkühler 490 ist wiederum eine eigene einstellbare Drossel 493 zugeordnet.

Die Anzahl an Wärmespeichereinheiten einer Wärmespeichergruppe ist in den beschriebenen Ausführungsformen rein illustrativ gewählt und kann grundsätzlich beliebig sein. Bei einer einstufigen Turbine kann bei den beschriebenen Ausführungsformen auf die dritte Wärmespeichergruppe verzichtet werden. Weist hingegen die Wärmekraftmaschinen-Generatoreinheit weitere Turbinenstufen auf, so können auch weitere Wärmespeichergruppen zusätzlich zu den beschriebenen vorgesehen werden.

Eine Leistung der Turbinen 81, 82 kann variabel an einen Bedarf angepasst werden. Grundsätzlich kann diese Leistungssteuerung durch eine Düsenregulierung oder ein Abdrosseln erfolgen. Bei einer Düsenregulierung wird die Anzahl genutzter Düsen verändert, durch welche das Arbeitsfluid auf die Turbine 81 oder 82 geleitet wird. Eine solche Düsenregulierung kann vorteilhaft sein, da übrige Betriebsparameter des Arbeitsfluids hiervon unberührt bleiben. Eine Leistungssteuerung der Turbine kann grundsätzlich die Wärmeentnahme aus der ersten und zweiten Wärmespeichergruppe durch das Arbeitsfluid beeinflussen. Prinzipiell besteht die Gefahr, dass die erste Wärmespeichergruppe leer wird, während die zweite Wärmespeichergruppe voll geladen ist. Dieses Problem kann verhindert werden, indem durch die Quenchkühler eine geeignete Steuerung erfolgt.

Die erfindungsgemäße Speichervorrichtung ermöglicht vorteilhafterweise, dass eine erste Wärmespeichergruppe über einen sehr großen Temperaturbereich betrieben werden kann, wobei das Arbeitsfluid bei Erreichen der Wärmekraftmaschinen-Generatoreinheit dennoch stets eine hohe, konstante Temperatur aufweisen kann.

## Patentansprüche

1. Speichervorrichtung zum vorübergehenden Speichern von elektrischer Energie in Form von Wärmeenergie,
- mit elektrischen Netzanschlussmitteln (5) zum Herstellen einer elektrischen Verbindung mit einem externen Stromnetz,
- mit einer ersten Wärmespeichergruppe (100), welche mindestens eine erste Wärmespeichereinheit (110) aufweist, umfassend:
• erste elektrische Heizmittel (112) zum Erzeugen von Wärmeenergie aus elektrischer Energie, wobei die ersten elektrischen Heizmittel (112) mit den elektrischen Netzanschlussmitteln (5) verbunden sind zum Aufnehmen von elektrischer Energie über die elektrischen Netzanschlussmittel (5);
• ein erstes Wärmespeichermedium (113), welches durch die ersten elektrischen Heizmittel (112) zum Speichern von erzeugter Wärmeenergie erhitzbar ist;
• einen ersten Wärmetauscher (114) zum Übertragen gespeicherter Wärmeenergie vom ersten Wärmespeichermedium (113) auf ein Arbeitsfluid;
- mit einer Wärmekraftmaschinen-Generatoreinheit (80) zum Umwandeln von Wärmeenergie in elektrische Energie, wobei die Wärmekraftmaschinen-Generatoreinheit (80) mit den elektrischen Netzanschlussmitteln (5) verbunden ist zum Ausgeben von erzeugter elektrischer Energie über die elektrischen Netzanschlussmittel (5),
- mit einem Leitungssystem (10) zum Befördern eines Arbeitsfluids von der ersten Wärmespeichergruppe (100) in Richtung der Wärmekraftmaschinen-Generatoreinheit (80),
- mit einer zweiten Wärmespeichergruppe (200), welche mindestens eine zweite Wärmespeichereinheit (210) aufweist, umfassend:
• zweite elektrische Heizmittel (212) zum Erzeugen von Wärmeenergie aus elektrischer Energie, wobei die zweiten elektrischen Heizmittel (212) mit den elektrischen Netzanschlussmitteln (5) verbunden sind zum Aufnehmen von elektrischer Energie über die elektrischen Netzanschlussmittel (5);
• ein zweites Wärmespeichermedium (213), welches durch die zweiten elektrischen Heizmittel (212) zum Speichern von erzeugter Wärmeenergie erhitzbar ist;
• einen zweiten Wärmetauscher (214) zum Übertragen gespeicherter Wärmeenergie vom zweiten Wärmespeichermedium (213) auf ein Arbeitsfluid;
- wobei das Leitungssystem (10) so gestaltet ist, dass ein Arbeitsfluid von der ersten Wärmespeichergruppe (100) zur zweiten Wärmespeichergruppe (200) und weiter zur Wärmekraftmaschinen-Generatoreinheit (80) leitbar ist, **dadurch gekennzeichnet,**
- **dass** das erste Wärmespeichermedium (113) ein Metall ist und das zweite Wärmespeichermedium (213) ein Metall ist,
**dass** ein erster Quenchkühler (190), welcher eine Kühleinrichtung ist zum Kühlen eines Fluids aus einer Leitung durch Vermischen mit einem anderen Fluid aus einer anderen Leitung, zwischen der ersten Wärmespeichergruppe (100) und der zweiten Wärmespeichergruppe (200) vorhanden und dazu eingerichtet ist, erhitztes Arbeitsfluid, das von der ersten Wärmespeichergruppe (100) kommt, mit nicht erhitztem Arbeitsfluid zu mischen, welches nicht durch eine der Wärmespeichergruppen (100, 200, 300) erhitzt worden ist,
und/oder
**dass** ein zweiter Quenchkühler (290), welcher eine Kühleinrichtung ist zum Kühlen eines Fluids aus einer Leitung durch Vermischen mit einem anderen Fluid aus einer anderen Leitung, zwischen der zweiten Wärmespeichergruppe (200) und der Wärmekraftmaschinen-Generatoreinheit (80) vorhanden und dazu eingerichtet ist, erhitztes Arbeitsfluid, das von der zweiten Wärmespeichergruppe (200) kommt, mit nicht erhitztem Arbeitsfluid zu mischen, welches nicht durch eine der Wärmespeichergruppen (100, 200, 300) erhitzt worden ist.

2. Speichervorrichtung nach Anspruch 1,
**dadurch gekennzeichnet,**
**dass** der erste Quenchkühler (190) Kühlungssteuerungsmittel (192, 193) aufweist, welche eingerichtet sind zum Einstellen einer Menge an nicht erhitztem Arbeitsfluid, welches dem ersten Quenchkühler (190) zugeführt wird, in Abhängigkeit von einer Temperatur des erhitzten Arbeitsfluids, welches dem ersten Quenchkühler (190) zugeführt wird, und/oder
**dass** der zweite Quenchkühler (290) Kühlungssteuerungsmittel (292, 293) aufweist, welche eingerichtet sind zum Einstellen einer Menge an nicht erhitztem Arbeitsfluid, welches dem zweiten Quenchkühler (290) zugeführt wird, in Abhängigkeit von einer Temperatur des erhitzten Arbeitsfluids, welches dem zweiten Quenchkühler (290) zugeführt wird.

3. Speichervorrichtung nach Anspruch 2,
**dadurch gekennzeichnet,**
**dass** die Kühlungssteuerungsmittel (192, 193) des ersten Quenchkühlers (190) und die Kühlungssteuerungsmittel (292, 293) des zweiten Quenchkühlers (290) jeweils eine steuerbare Pumpe (192, 292) und/oder eine steuerbare Drossel (193, 293) aufweisen.

4. Speichervorrichtung nach einem der Ansprüche 1 bis 3,
**dadurch gekennzeichnet,**
**dass** eine Wärmespeicherkapazität der ersten Wärmespeichergruppe (100) größer ist als eine Wärmespeicherkapazität der zweiten Wärmespeichergruppe (200).

5. Speichervorrichtung nach Anspruch 4,
**dadurch gekennzeichnet,**
**dass** eine Anzahl an Wärmespeichereinheiten (110, 120, 130, 140) der ersten Wärmespeichergruppe (100) größer ist als eine Anzahl an Wärmespeichereinheiten (210, 220) der zweiten Wärmespeichergruppe (200).

6. Speichervorrichtung nach einem der Ansprüche 1 bis 5,
**dadurch gekennzeichnet,**
**dass** die Wärmekraftmaschinen-Generatoreinheit (80) eine mehrstufige Dampfturbine (81, 82) mit mindestens einer ersten Turbinenstufe (81) und einer zweiten Turbinenstufe (82) umfasst,
**dass** eine dritte Wärmespeichergruppe (300) vorhanden ist, welche eine dritte Wärmespeichereinheit (310) aufweist, umfassend:
• dritte elektrische Heizmittel zum Erzeugen von Wärmeenergie aus elektrischer Energie, wobei die dritten elektrischen Heizmittel mit den elektrischen Netzanschlussmitteln (5) verbunden sind zum Aufnehmen von elektrischer Energie über die elektrischen Netzanschlussmittel (5);
• ein drittes Wärmespeichermedium, welches ein Metall ist und durch die dritten elektrischen Heizmittel zum Speichern von erzeugter Wärmeenergie erhitzbar ist;
• einen dritten Wärmetauscher zum Übertragen gespeicherter Wärmeenergie vom dritten Wärmespeichermedium auf ein Arbeitsfluid;
**dass** das Leitungssystem (10) so gestaltet ist, dass ein Arbeitsfluid von der zweiten Wärmespeichergruppe (200) zu der ersten Turbinenstufe (81), von der ersten Turbinenstufe (81) zur dritten Wärmespeichergruppe (300) und von der dritten Wärmespeichergruppe (300) zur zweiten Turbinenstufe (82) leitbar ist.

7. Speichervorrichtung nach einem der Ansprüche 1 bis 6,
**dadurch gekennzeichnet,**
**dass** mindestens eine der Wärmespeichergruppen (100, 200, 300) mehrere Wärmespeichereinheiten umfasst, welche bezüglich einer Leitung des Arbeitsfluids parallel zueinander angeordnet sind, so dass das Arbeitsfluid auf separate Leitungsabschnitte aufgeteilt wird, die jeweils zu einem dieser Wärmespeichereinheiten führen, und nach Durchlaufen dieser Wärmespeichereinheiten wieder zusammengeführt wird.

8. Speichervorrichtung nach Anspruch 7,
**dadurch gekennzeichnet,**
**dass** in jedem der separaten Leitungsabschnitte eine Drossel angeordnet ist zum Erzeugen eines Druckabfalls des Arbeitsfluides.

9. Speichervorrichtung nach Anspruch 7 oder 8,
**dadurch gekennzeichnet,**
**dass** die Wärmespeichereinheiten (110, 120, 130, 140) der ersten Wärmespeichergruppe (100) jeweils eine Drossel (116, 126, 136, 146) in dem zugehörigen separaten Leitungsabschnitt aufweisen, nicht aber die Wärmespeichereinheiten (210, 220) der zweiten Wärmespeichergruppe (200).

10. Speichervorrichtung nach einem der Ansprüche 1 bis 9,
**dadurch gekennzeichnet,**
**dass** außer dem ersten Quenchkühler (190) mindestens ein weiterer Quenchkühler (490) zwischen der ersten Wärmespeichergruppe (100) und der zweiten Wärmespeichergruppe (200) vorhanden ist,
wobei ein oder mehrere Wärmespeichereinheiten (110, 120) der ersten Wärmespeichergruppe (100) mit dem ersten Quenchkühler (190) verbunden sind, während ein oder mehrere andere der Wärmespeichereinheiten (130, 140) der ersten Wärmespeichergruppe (100) mit dem mindestens einen weiteren Quenchkühler (490) verbunden sind, und
wobei der erste Quenchkühler (190) mit mindestens einer der Wärmespeichereinheiten (210) der zweiten Wärmespeichergruppe verbunden ist, während der mindestens eine weitere Quenchkühler (490) mit einer oder mehreren anderen Wärmespeichereinheiten (220) der zweiten Wärmespeichergruppe (200) verbunden ist.

11. Speichervorrichtung nach Anspruch 10,
**dadurch gekennzeichnet,**
**dass** jede der Wärmespeichereinheiten (210, 220) der zweiten Wärmespeichergruppe (200) mit jeweils einem davor befindlichen Quenchkühler (190, 490) verbunden ist und
**dass** jeder der Quenchkühler (190, 490), die zwischen der ersten und zweiten Wärmespeichergruppe (100, 200) angeordnet sind, mit jeweils mindestens zwei Wärmespeichereinheiten (110, 120; 130, 140) der ersten Wärmespeichergruppe (100) verbunden ist.

12. Verfahren zum vorübergehenden Speichern von elektrischer Energie in Form von Wärmeenergie in einer Speichervorrichtung (1),
wobei das Verfahren zumindest die folgenden Schritte umfasst:
- Aufnehmen von elektrischer Energie aus einem externen Stromnetz über elektrische Netzanschlussmittel (5) der Speichervorrichtung (1),
- Umwandeln aufgenommener elektrischer Energie in Wärmeenergie und Speichern der Wärmeenergie mittels einer ersten Wärmespeichergruppe (100) der Speichervorrichtung (1), wozu die erste Wärmespeichergruppe (100) eine erste Wärmespeichereinheit (110) aufweist, mit welcher die folgenden Schritte ausgeführt werden:
- Erzeugen von Wärmeenergie aus elektrischer Energie durch erste elektrische Heizmittel (112), welche über die elektrischen Netzanschlussmittel (5) elektrische Energie aufnehmen;
- Speichern von Wärmeenergie, die von den ersten elektrischen Heizmitteln (112) erzeugt wird, in einem ersten Wärmespeichermedium (113),
- Übertragen gespeicherter Wärmeenergie vom ersten Wärmespeichermedium (113) auf ein Arbeitsfluid mittels eines ersten Wärmetauschers (114);
- Befördern des Arbeitsfluids von der ersten Wärmespeichergruppe (100) in Richtung einer Wärmekraftmaschinen-Generatoreinheit (80) mittels eines Leitungssystems (10);
- Umwandeln von Wärmeenergie des Arbeitsfluids in elektrische Energie mittels der Wärmekraftmaschinen-Generatoreinheit (80),
- Ausgeben von elektrischer Energie, die von der Wärmekraftmaschinen-Generatoreinheit (80) erzeugt wird, über die elektrischen Netzanschlussmittel (5) an das externe Stromnetz,
- Leiten des Arbeitsfluids von der ersten Wärmespeichergruppe (100) über eine zweite Wärmespeichergruppe (200) zur Wärmekraftmaschinen-Generatoreinheit (80), wobei die zweite Wärmespeichergruppe (200) mindestens eine zweite Wärmespeichereinheit (210) aufweist, mit welcher die folgenden Schritte ausgeführt werden:
• Erzeugen von Wärmeenergie aus elektrischer Energie durch zweite elektrische Heizmittel (212) der zweiten Wärmespeichereinheit (210), welche über die elektrischen Netzanschlussmittel (5) elektrische Energie aufnehmen;
• Speichern von Wärmeenergie, die von den zweiten elektrischen Heizmitteln (212) erzeugt wird, in einem zweiten Wärmespeichermedium (213) der zweiten Wärmespeichereinheit (210), und
• Übertragen gespeicherter Wärmeenergie vom zweiten Wärmespeichermedium (213) auf das Arbeitsfluid mittels eines zweiten Wärmetauschers (214) der zweiten Wärmespeichereinheit (210),
**dadurch gekennzeichnet,**
**dass** das erste Wärmespeichermedium (113) ein Metall ist und das zweite Wärmespeichermedium (213) ein Metall ist, und dass das Verfahren außerdem die folgenden Schritte umfasst:
- Abkühlen von erhitztem Arbeitsfluid, das von der ersten Wärmespeichergruppe (100) kommt, bevor es die zweite Wärmespeichergruppe (200) erreicht, mit Hilfe eines ersten Quenchkühlers (190), welcher eine Kühleinrichtung ist, mit welcher das erhitzte Arbeitsfluid mit nicht erhitztem Arbeitsfluid vermischt wird, wobei das nicht erhitzte Arbeitsfluid nicht durch eine der Wärmespeichergruppen (100, 200, 300) erhitzt worden ist,
und/oder
- Abkühlen von erhitztem Arbeitsfluid, das von der zweiten Wärmespeichergruppe (200) kommt, bevor es die Wärmekraftmaschinen-Generatoreinheit (80) erreicht, mit Hilfe eines zweiten Quenchkühlers (290), welcher eine Kühleinrichtung ist, mit welcher das erhitzte Arbeitsfluid mit nicht erhitztem Arbeitsfluid vermischt wird, wobei das nicht erhitzte Arbeitsfluid nicht durch eine der Wärmespeichergruppen (100, 200, 300) erhitzt worden ist.

13. Verfahren nach Anspruch 12,
**dadurch gekennzeichnet,**
**dass** ein Anteil des Arbeitsfluids durch die erste Wärmespeichergruppe (100) geleitet und dort erhitzt wird,
**dass** ein anderer Anteil des Arbeitsfluids nicht durch die erste Wärmespeichergruppe (100) geleitet und somit dort nicht erhitzt wird,
**dass** die beiden Anteile des Arbeitsfluids in dem ersten Quenchkühler (190) zwischen der ersten Wärmespeichergruppe (100) und der zweiten Wärmespeichergruppe (200) zusammengeführt werden, wobei der Anteil des Arbeitsfluids, der nicht durch die erste Wärmespeichergruppe (100) geleitet wird, so geregelt wird, dass eine Temperatur des Arbeitsfluids hinter dem ersten Quenchkühler (190) möglichst konstant ist.

14. Verfahren nach Anspruch 12 oder 13,
**dadurch gekennzeichnet,**
**dass** eine Aufnahme elektrischer Energie, die durch die erste Wärmespeichergruppe (100) in Wärmeenergie umgewandelt wird, so gewählt wird, dass im Betrieb der Speichervorrichtung (1) eine Temperatur des Wärmespeichermediums (113) der ersten Wärmspeichergruppe (100) stets oberhalb einer ersten Temperaturuntergrenze liegt,
**dass** eine Aufnahme elektrischer Energie, die durch die zweite Wärmespeichergruppe (200) in Wärmeenergie umgewandelt wird, so gewählt wird, dass im Betrieb der Speichervorrichtung eine Temperatur des Wärmespeichermediums (213) der zweiten Wärmespeichergruppe (200) stets oberhalb einer zweiten Temperaturuntergrenze liegt,
wobei die zweite Temperaturuntergrenze größer ist als die erste Temperaturuntergrenze.

## Claims

1. Storage device for temporarily storing electrical energy in the form of heat energy, comprising:
- electrical grid connection means (5) for establishing an electrical connection with an external electrical grid,
- a first heat storage group (100) including at least a first heat storage unit (110) comprising:
• first electrical heating means (112) for producing heat energy from electrical energy, wherein the first electrical heating means (112) are connected with the electrical grid connection means (5) for receiving electrical energy through the electrical grid connections means (5);
• a first heat storage medium (113), which can be heated by the first electrical heating means (112) for storing produced heat energy;
• a first heat exchanger (114) for transferring stored heat energy from the first heat storage medium (113) to a working fluid;
- a thermal engine-generator unit (80) for converting heat energy in electrical energy, wherein the thermal engine-generator unit (80) is connected with the electrical grid connection means (5) for outputting produced electrical energy through the electrical grid connections means (5),
- a line system (10) for transporting a working fluid from the first heat storage group (100) in the direction of the thermal engine-generator unit (80),
- a second heat storage group (200) including at least a second heat storage unit (210) comprising:
• second electrical heating means (212) for producing heat energy from electrical energy, wherein the second electrical heating means (212) are connected with the electrical grid connection means (5) for receiving electrical energy through the electrical grid connections means (5);
• a second heat storage medium (213) which can be heated by the second electrical heating means (212) for storing produced heat energy;
• a second heat exchanger (214) for transferring stored heat energy from the second heat storage medium (213) to a working fluid;
- wherein the line system (10) is configured such that a working fluid can be transferred from the first heat storage group (100) to the second heat storage group (200) and further to the thermal engine-generator unit (80),
**characterized in that**
- the first heat storage medium (113) is a metal and the second heat storage medium (213) is a metal,
a first quench cooler (190) is arranged between the first heat storage group (100) and the second heat storage group (200), the first quench cooler (190) being a cooling device for cooling a fluid from a line by mixing with another fluid from another line and being configured to mix heated working fluid, which comes from the first heat storage group (100), with non-heated working fluid which has not been heated by one of the heat storage groups (100, 200, 300),
and/or
a second quench cooler (290) is provided between the second heat storage group (200) and the thermal engine-generator unit (80), the second quench cooler (290) being a cooling device for cooling a fluid from a line by mixing it with another fluid from another line and configured to mix heated working fluid, which comes from the second storage group (200) with non-heated working fluid which has not been heated by the heat storage groups (100, 200, 300).

2. Storage device as defined in claim 1,
**characterized in that**
the first quench cooler (190) comprises cooling control means (192, 193) which are configured to set a quantity of a non-heated working fluid which is supplied to the first quench cooler (190) in dependence of a temperature of the heated working fluid which is supplied to the first quench cooler (190), and/or
the second quench cooler (290) comprises cooling control means (292, 293) which are configured to set a quantity of a non-heated working fluid which is supplied to the second quench cooler (290) in dependence of a temperature of the heated working fluid which is supplied to the second quench cooler (290).

3. Storage device as defined in claim 2,
**characterized in that**
the cooling control means (192, 193) of the first quench cooler (190) and the cooling control means (292, 293) of the second quench cooler (290) each comprise a controllable pump (192, 292) and/or a controllable throttle (193, 293).

4. Storage device as defined in any one of the claims 1 to 3,
**characterized in that**
a heat storage capacity of the heat storage group (100) is larger than a heat storage capacity of the second heat storage group (200).

5. Storage device as defined in claim 4,
**characterized in that**
a number of heat storage units (110, 120, 130, 140) of the first heat storage group (100) is larger than a number of heat storage units (210, 220) of the second heat storage group (200).

6. Storage device as defined in any one of the claims 1 to 5,
**characterized in that**
the thermal engine-generator unit (80) comprises a multi-stage steam turbine (81, 82) with at least a first turbine stage (81) and a second turbine stage (82), a third heat storage group (300) is provided which comprises a third heat storage unit (310) comprising:
• third electrical heating means for producing heat energy from electrical energy, wherein the third electrical heating means are connected with the electrical grid connection means (5) for receiving electrical energy through the electrical grid connections means (5);
• a third heat storage medium which is a metal and can be heated by the third electrical heating means for storing produced heat energy;
• a third heat exchanger for transferring stored heat energy from the third heat storage medium to a working fluid;
the line system (10) is configured such that a working fluid can be transferred from the heat storage group (200) to the first turbine stage (81), from the first turbine stage (81) to the third heat storage group (300) and from the third heat storage group (300) to the second turbine stage (82).

7. Storage device as defined in any one of the claims 1 to 6,
**characterized in that**
at least one of the heat storage groups (100, 200, 300) comprises several heat storage units which are arranged in a parallel connection to each other in respect to a line of the working fluid so that the working fluid is spread into separate line segments which each lead to one of said heat storage units and is united again after passing said heat storage units.

8. Storage device as defined in claim 7,
**characterized in that**
a throttle is arranged in each of the separate line segments for causing a pressure drop of the working fluid.

9. Storage device as defined in claim 7 or 8,
**characterized in that**
the heat storage units (110, 120, 130, 140) of the first heat storage group (100) but not the heat storage units (210, 220) of the second heat storage group (200) each comprise a throttle (116, 126, 136, 146) in the respective separate line segment.

10. Storage device as defined in any one of the claims 1 to 9,
**characterized in that**
in addition to the first quench cooler (190), at least an additional quench cooler (490) is provided between the first heat storage group (100) and the second heat storage group (200),
wherein one or more heat storage units (110, 120) of the first heat storage group (100) are connected with the first quench cooler (190) whereas one other or several others of the heat storage units (130, 140) of the first heat storage group (100) are connected with at least one additional quench cooler (490), and wherein the first quench cooler (190) is connected with at least one of the heat storage units (210) of the second heat storage group whereas the at least one additional quench cooler (490) is connected with one or several other heat storage units (220) of the second heat storage group (200).

11. Storage device as defined in claim 10,
**characterized in that**
each of the heat storage units (210, 220) of the second heat storage group (200) is connected with a respective upstream-arranged quench cooler (190, 490) and each of the quench coolers (190, 490) which are arranged between the first and the second heat storage groups (100, 200) is connected with at least two respective heat storage units (110, 120; 130, 140) of the first heat storage group (100).

12. Method for transiently storing electrical energy in the form of heat energy in a storage device (1),
wherein the method comprises at least the following steps:
- receiving electrical energy from an external electrical grid through electrical grid connections means (5) of the storage device (1),
- converting received electrical energy into heat energy and storing the heat energy with a first heat storage group (100) of the storage device (1), the first heat storage group (100) comprising a first heat storage unit (110) for that purpose, wherein the following steps are carried out with the first heat storage unit (110):
- producing heat energy from electrical energy with first electrical heating means (112) which receive electrical energy through the electrical grid connections means (5);
- storing heat energy produced by the first electrical heating means (112) in a first heat storage medium (113);
- transferring stored heat energy from the first heat storage medium (113) to a working fluid via a first heat exchanger (114);
- transporting the working fluid from the first heat storage group (100) towards a thermal engine-generator unit (80) via a line system (10);
- converting heat energy of the working fluid into electrical energy with the thermal engine-generator unit (80),
- outputting electrical energy produced by the thermal engine-generator unit (80) via the electrical grid connections means (5) to the external electrical grid,
- transporting the working fluid from the first heat storage group (100) via a second heat storage group (200) to the thermal engine-generator unit (80), wherein the second heat storage group (200) comprises at least one second heat storage unit (210) with which the following steps are carried out:
• producing heat energy from electrical energy with second electrical heating means (212) of the second heat storage unit (210) which receive electrical energy through the electrical grid connections means (5);
• storing heat energy produced by the second electrical heating means (212) in a second heat storage medium (213) of the second heat storage unit (210); and
• transferring stored heat energy from the second heat storage medium (213) to the working fluid via a second heat exchanger (214) of the second heat storage unit (210);
**characterized in that**
the first heat storage medium (113) is a metal and the second heat storage medium (213) is a metal, and
the method further comprises the following steps:
- cooling heated working fluid coming from the first heat storage group (100) before reaching the second heat storage group (200) by means of a first quench cooler (190) which is a cooling device with which the heated working fluid is mixed with non-heated working fluid, wherein the non-heated working fluid has not been heated by one of the heat storage groups (100, 200, 300),
and/or
- cooling heated working fluid coming from the second heat storage group (200) before reaching the thermal engine-generator unit (80) by means of a second quench cooler (290) which is a cooling device with which the heated working fluid is mixed with non-heated working fluid, wherein the non-heated working fluid has not been heated by one of the heat storage groups (100, 200, 300).

13. Method as defined in claim 12,
**characterized in that**
a portion of the working fluid is transported through the first heat storage group (100) and is heated up there,
another portion of the working fluid is not transported through the first heat storage group (100) and is thus not heated up there,
the two portions of the working fluid are merged in the first quench cooler (190) between the first heat storage group (100) and the second heat storage group (200), wherein the portion of the working fluid that is not transported through the first heat storage group (100) is adjusted such that a temperature of the working fluid downstream of the first quench cooler (190) is substantially constant.

14. Method as defined in claim 12 or 13,
**characterized in that**
the step of receiving electrical energy which is converted into heat energy by the first heat storage group (100) is chosen such that a temperature of the heat storage medium (113) of the first heat storage group (100) is always above a first lower temperature limit during operation of the storage device (1),
the step of receiving electrical energy which is converted into heat energy by the second heat storage group (200) is chosen such that a temperature of the heat storage medium (213) of the second heat storage group (200) is always above a second lower temperature limit during operation of the storage device, wherein the second lower temperature limit is larger than the first lower temperature limit.

## Revendications

1. Dispositif de stockage pour stocker temporairement de l'énergie électrique sous forme d'énergie thermique, comprenant :
- des moyens de raccordement au réseau électrique (5) pour établir une connexion électrique avec un réseau électrique externe,
- un premier groupe de stockage de chaleur (100) incluant au moins une première unité de stockage de chaleur (110) comprenant :
• des premiers moyens de chauffage électriques (112) pour la production d'énergie thermique à partir d'énergie électrique, tandis que les premiers moyens de chauffage électriques (112) sont connectés avec les moyens de raccordement au réseau électrique (5) pour la réception d'énergie électrique via les moyens de raccordement au réseau électrique (5),
• un premier milieu de stockage de chaleur (113), qui peut être chauffé via les premiers moyens de chauffage électriques (112) pour stocker de l'énergie thermique produite,
• un premier échangeur de chaleur (114) pour transférer l'énergie thermique stockée du premier milieu de stockage de chaleur (113) sur un fluide de travail,
- une unité machine-générateur thermique (80) pour convertir de l'énergie thermique en énergie électrique, tandis que l'unité machine-générateur thermique (80) est connectée aux moyens de raccordement au réseau électrique (5) pour l'émission d'énergie électrique produite via les moyens de raccordement au réseau électrique (5),
- un système de conduites (10) pour transporter un fluide de travail du premier groupe de stockage de chaleur (100) en direction de l'unité machine-générateur thermique (80),
- un deuxième groupe de stockage de chaleur (200) incluant au moins une deuxième unité de stockage de chaleur (210), comprenant :
• des deuxièmes moyens de chauffage électriques (212) pour produire de l'énergie thermique à partir d'énergie électrique, tandis que les deuxièmes moyens de chauffage électriques (212) sont connectés aux moyens de raccordement au réseau électrique (5) pour recevoir de l'énergie électrique par le biais des moyens de raccordement au réseau électrique (5),
• un deuxième milieu de stockage de chaleur (213), qui peut être chauffé par les deuxièmes moyens de chauffage électriques (212) pour stocker de l'énergie thermique produite,
• un deuxième échangeur de chaleur (214) pour transférer de l'énergie thermique stockée du deuxième milieu de stockage de chaleur (213) sur un fluide de travail,
- tandis que le système de conduites (10) est configuré de telle sorte qu'un fluide de travail peut être conduit du premier groupe de stockage de chaleur (100) au deuxième groupe de stockage de chaleur (200) puis à l'unité machine-générateur thermique (80),
**caractérisé en ce que**
- le premier milieu de stockage de chaleur (113) est un métal et le deuxième milieu de stockage de chaleur (213) est un métal,
un premier refroidisseur à trempe (190), lequel est un dispositif de refroidissement pour refroidir un fluide d'une conduite par le biais d'un mélange avec un autre fluide d'une autre conduite, est agencé entre le premier groupe de stockage de chaleur (100) et le deuxième groupe de stockage de chaleur (200) et configuré pour mélanger du fluide de travail chauffé provenant du premier groupe de stockage de chaleur (100) avec du fluide de travail non chauffé n'ayant pas été chauffé par l'un des groupes de stockage de chaleur (100, 200, 300),
et/ou
un deuxième refroidisseur à trempe (290), lequel est un un appareil de refroidissement pour refroidir un fluide à partir d'une conduite en le mélangeant avec un autre fluide provenant d'une autre conduite, est agencé entre le premier groupe de stockage de chaleur (200) et l'unité machine-générateur thermique (80) et configuré pour mélanger du fluide de travail chauffé provenant du deuxième groupe de stockage (200) avec du fluide de travail non chauffé n'ayant pas été chauffé par l'un des groupes de stockage de chaleur (100, 200, 300).

2. Dispositif de stockage selon la revendication 1,
**caractérisé en ce que**
le premier refroidisseur à trempe (190) comprend des moyens de commande de refroidissement (192, 193), lesquels sont configurés pour régler une quantité de fluide de travail non chauffé, lequel est conduit vers le premier refroidisseur à trempe (190) en fonction d'une température du fluide de travail chauffé conduit vers le premier refroidisseur à trempe (190), et/ou
le deuxième refroidisseur à trempe (290) comprend des moyens de commande de refroidissement (292, 293), lesquels sont configurés pour régler une quantité de fluide de travail non chauffé, lequel est fourni au deuxième refroidisseur à trempe (290) en fonction d'une température du fluide de travail chauffé conduit vers le deuxième refroidisseur à trempe (290).

3. Dispositif de stockage selon la revendication 2
**caractérisé en ce que**
les moyens de commande de refroidissement (192, 193) du premier refroidisseur à trempe (190) et les moyens de commande de refroidissement (292, 293) du deuxième refroidisseur à trempe (290) comprennent, les uns et les autres, une pompe contrôlable (192, 292) et/ou un étrangleur contrôlable (193, 293).

4. Dispositif de stockage selon l'une des revendications 1 à 3
**caractérisé en ce que**
une capacité de stockage de chaleur du premier groupe de stockage de chaleur (100) est supérieure à une capacité de stockage de chaleur du deuxième groupe de stockage de chaleur (200).

5. Dispositif de stockage selon la revendication 4
**caractérisé en ce que**
un nombre d'unités de stockage de chaleur (110, 120, 130, 140) du premier groupe de stockage de chaleur (100) est supérieur à un nombre d'unités de stockage de chaleur (210, 220) du deuxième groupe de stockage de chaleur (200).

6. Dispositif de stockage selon une des revendications 1 à 5
**caractérisé en ce que**
l'unité machine-générateur thermique (80) comprend une turbine à vapeur multi-étages (81, 82) avec au moins un premier étage de turbine (81) et un deuxième étage de turbine (82),
un troisième groupe de stockage de chaleur (300) incluant une troisième unité de stockage de chaleur (310) est fourni, y compris :
• des troisièmes moyens de chauffage pour produire de l'énergie thermique à partir d'énergie électrique, tandis que les troisièmes moyens de chauffage électriques sont connectés aux moyens de raccordement au réseau électrique (5) pour recevoir de l'énergie électrique via les moyens de raccordement au réseau électrique (5),
• un troisième milieu de stockage de chaleur, lequel est un métal et peut être chauffé par le biais des troisièmes moyens de chauffage électriques pour le stockage de l'énergie thermique produite,
• un troisième échangeur thermique pour transférer l'énergie thermique stockée du troisième milieu de stockage de chaleur sur un fluide de travail,
le système de conduites (10) est configuré de telle sorte qu'un fluide de travail peut être conduit du deuxième groupe de stockage de chaleur (200) au premier étage de turbine (81), du premier étage de turbine (81) au troisième groupe de stockage de chaleur (300) et du troisième groupe de stockage de chaleur (300) au deuxième étage de turbine (82).

7. Dispositif de stockage selon les revendications 1 à 6
**caractérisé en ce que**
au moins un des groupes de stockage de chaleur (100, 200, 300) comprend plusieurs unités de stockage de chaleur, lesquelles sont agencées parallèlement les unes au autres par rapport à une conduite du fluide de travail, de sorte que le fluide de travail est répandu dans des segments de conduites séparés, lesquels conduisent à l'une desdites unités de stockage de chaleur, et réunifié après être passé dans lesdites unités de stockage de chaleur.

8. Dispositif de stockage selon la revendication 7
**caractérisé en ce que**
un étrangleur est agencé dans chacun des segments de conduite séparés pour produire une chute de pression du fluide de travail.

9. Dispositif de stockage selon la revendication 7 ou 8
**caractérisé en ce que**
les unités de stockage de chaleur (110, 120, 130, 140) du premier groupe de stockage de chaleur (100), et non pas les unités de stockage de chaleur (210, 220) du deuxième groupe de stockage de chaleur (200), comprennent chacune un étrangleur (116, 126, 136, 146) dans le segment de conduite séparé respectif.

10. Dispositif de stockage selon une des revendications 1 à 9
**caractérisé en ce que**
outre le premier refroidisseur à trempe (190), au moins un autre refroidisseur à trempe (490) est fourni entre le premier groupe de stockage de chaleur (100) et le deuxième groupe de stockage de chaleur (200),
tandis qu'une ou plusieurs unités de stockage de chaleur (110, 120) du premier groupe de stockage de chaleur (100) sont connectées au premier refroidisseur à trempe (190), tandis qu'une ou plusieurs autres unités de stockage de chaleur parmi les unités de stockage de chaleur (130, 140) du premier groupe de stockage de chaleur (100) sont connectées à au moins un refroidisseur à trempe additionnel (490), et
tandis que le premier refroidisseur à trempe (190) est connecté à au moins une des unités de stockage de chaleur (210) du deuxième groupe de stockage de chaleur, tandis que le au moins un refroidisseur à trempe additionnel (490) est connecté à une ou plusieurs unités de stockage de chaleur (220) du deuxième groupe de stockage de chaleur (200).

11. Dispositif de stockage selon la revendication 10
**caractérisé en ce que**
chacune des unités de stockage de chaleur (210, 220) du deuxième groupe de stockage de chaleur (200) est connectée à un refroidisseur à trempe respectif situé en amont (190, 490) et
chacun des refroidisseurs à trempe (190, 490) qui sont agencés entre le premier et le deuxième groupe de stockage de chaleur (100, 200) est connecté à au moins deux unités de stockage de chaleur respectives (110, 120, 130, 140) du premier groupe de stockage de chaleur (100).

12. Procédé pour stocker temporairement de l'énergie électrique sous forme d'énergie thermique dans un dispositif de stockage (1),
tandis que le procédé comprend au moins les deux étapes suivantes :
- réception d'énergie électrique d'un réseau électrique externe via des moyens de raccordement au réseau électrique (5) du dispositif de stockage (1),
- conversion d'énergie électrique reçue en énergie thermique et stockage de l'énergie thermique grâce à un premier groupe de stockage de chaleur (100) du dispositif de stockage (1), le premier groupe de stockage de chaleur (100) comprenant à cette fin une première unité de stockage de chaleur (110), avec laquelle sont exécutées les étapes suivantes :
- production d'énergie thermique à partir d'énergie électrique via les premiers moyens de chauffage électriques (112), lesquels reçoivent de l'énergie électrique par le biais des moyens de raccordement au réseau électrique (5),
- stockage d'énergie thermique produite par les premiers moyens de chauffage électriques (112) dans un premier milieu de stockage de chaleur (113),
- transfert d'énergie thermique stockée du premier milieu de stockage de chaleur (113) sur un fluide de travail via un premier échangeur thermique (114),
- transport du fluide de travail du premier groupe de stockage thermique (100) vers une unité machine-générateur thermique (80) via un système de conduites (10),
- conversion d'énergie thermique du fluide de travail en énergie électrique via l'unité machine-générateur thermique (80),
- émission d'énergie électrique produite par l'unité machine-générateur thermique (80) via les moyens de raccordement au réseau électrique (5) vers le réseau électrique externe,
- transport du fluide de travail du premier groupe de stockage de chaleur (100) via un deuxième groupe de stockage de chaleur (200) vers l'unité machine-générateur thermique (80), tandis que le deuxième groupe de stockage de chaleur (200) comprend au moins une deuxième unité de stockage de chaleur (210) avec laquelle les étapes suivantes sont exécutées :
• production d'énergie thermique à partir d'énergie électrique avec les deuxièmes moyens de chauffage électriques (212) de la deuxième unité de stockage de chaleur (210), laquelle reçoit l'énergie électrique via les moyens de raccordement au réseau électrique (5),
• stockage d'énergie thermique produite par les deuxièmes moyens de chauffage électriques (212) dans un deuxième milieu de stockage de chaleur (213) de la deuxième unité de stockage de chaleur (210), et
• transfert de l'énergie thermique stockée du deuxième milieu de stockage de chaleur (213) sur le fluide de travail via un deuxième échangeur de chaleur (214) de la deuxième unité de stockage de chaleur (210),
**caractérisé en ce que**
le premier milieu de stockage de chaleur (113) est un métal et le deuxième milieu de stockage de chaleur (213) est un métal, et
le procédé comprend également les étapes suivantes :
- refroidissement de fluide de travail chauffé provenant du premier groupe de stockage de chaleur (100) avant qu'il n'atteigne le deuxième groupe de stockage de chaleur (200) à l'aide d'un premier refroidisseur à trempe (190), lequel est un dispositif de refroidissement avec lequel le fluide de travail chauffé est mélangé à du fluide de travail non chauffé, tandis que le fluide de travail non chauffé n'a pas été chauffé par l'un des groupes de stockage de chaleur (100, 200, 300),
et/ou
- refroidissement de fluide de travail chauffé provenant du deuxième groupe de stockage de chaleur (200) avant d'atteindre l'unité machine-générateur thermique (80) par le biais d'un deuxième refroidisseur à trempe (290), lequel est un dispositif de refroidissement avec lequel le fluide de travail chauffé est mélangé avec du fluide de travail non chauffé, tandis que le fluide de travail non chauffé n'a pas été chauffé par l'un des groupes de stockage de chaleur (100, 200, 300).

13. Procédé selon la revendication 12
**caractérisé en ce que**
une partie du fluide de travail est transportée via le premier groupe de stockage de chaleur (100) et est chauffé là-bas,
une autre partie du fluide de travail n'est pas transportée via le premier groupe de stockage de chaleur (100) et n'est donc pas chauffée là-bas,
les deux parties du fluide de travail sont mélangées dans le premier refroidisseur à trempe (190) entre le premier groupe de stockage de chaleur (100) et le deuxième groupe de stockage de chaleur (200), tandis que la partie du fluide de travail qui n'est pas transportée via le premier groupe de stockage de chaleur (100) est ajustée de telle sorte qu'une température du fluide de travail en aval du premier refroidisseur à trempe (190) soit autant que possible constante.

14. Procédé selon la revendication 12 ou 13
**caractérisé en ce que**
l'étape de la réception d'énergie électrique, laquelle est convertie en énergie thermique via le premier groupe de stockage de chaleur (100), est choisie de telle sorte qu'une température du milieu de stockage de chaleur (113) du premier groupe de stockage de chaleur (100) soit toujours supérieure à un premier seuil inférieur de température durant le fonctionnement du dispositif de stockage (1),
l'étape de la réception d'énergie électrique, laquelle est convertie en énergie thermique par le deuxième groupe de stockage de chaleur (200), est choisie de sorte qu'une température du medium de stockage de chaleur (213) du deuxième groupe de stockage de chaleur (200) est toujours supérieure à un deuxième seuil inférieur de température durant le fonctionnement du dispositif de stockage,
tandis que le deuxième seuil inférieur de température est plus élevé que le premier seuil inférieur de température.
